# EUROPÄISCHE PATENTSCHRIFT

(11) **EP 4 093 017 B1**
(45) Veröffentlichungstag und Bekanntmachung des Hinweises auf die Patenterteilung: **12.02.2025**
(21) Anmeldenummer: 22173178.9
(22) Anmeldetag: 13.05.2022
(51) Int. Cl.: H04N 23/50, G03B 17/56, H04N 23/66, H04N 23/663, G03B 3/12

(54) **FERNSTEUEREINHEIT**
REMOTE CONTROL UNIT
UNITÉ DE TÉLÉCOMMANDE

(30) Priorität: 21.05.2021 DE 202021102811 U
(43) Veröffentlichungstag der Anmeldung: 23.11.2022
(60) Teilanmeldung: 24219686.3
(73) Patentinhaber: Arnold & Richter Cine Technik GmbH & Co. Betriebs KG, 80807 München (DE)
(72) Erfinder: VOSS, Hendrik, 81371 München (DE)
(74) Vertreter: Manitz Finsterwald Patent- und Rechtsanwaltspartnerschaft mbB

(56) Entgegenhaltungen:
- JP-A- 2000 050 143
- US-A- 5 537 175
- US-A1- 2004 125 553
- US-A1- 2008 284 899

## Beschreibung

Die Erfindung betrifft eine Fernsteuereinheit zum Steuern einer Bewegtbildkamera, insbesondere einer elektronischen Bewegtbildkamera und/oder einer Filmkamera. Eine solche Fernsteuereinheit kann insbesondere dazu vorgesehen sein, Parameter oder Einstellungen einer Bewegtbildkamera während einer Bewegtbildaufnahme ferngesteuert zu verändern, so dass ein die Bewegtbildkamera führender Kameramann die Bewegtbildkamera auf einen bestimmten Bildausschnitt ausrichten oder etwa einen Kameraschwenk vornehmen kann, ohne zusätzlich beispielsweise auch für eine Anpassung einer Fokuslage oder eines Zoom-Faktors der Kamera sorgen zu müssen. Derartige Anpassungen können vielmehr komfortabel mittels der Fernsteuereinheit und beispielsweise von einem Kameraassistenten vorgenommen werden, wobei der Kameraassistent insbesondere eine Folge zuvor mit dem Kameramann abgesprochener Steuerbefehle an der Fernsteuereinheit einstellen kann, um Parameter der Bewegtbildkamera während einer Aufnahme anzupassen.

Grundsätzlich ermöglicht es eine solche Fernsteuereinheit somit, die Aufgaben der Ausrichtung der Bewegtbildkamera einerseits und der Anpassung von Parametern und Einstellungen der Bewegtbildkamera andererseits während einer Aufnahme mit der Bewegtbildkamera aufzuteilen, so dass die beiden Aufgaben von verschiedenen Personen erfüllt werden können. Um jedoch eine zuverlässige Steuerung einer Bewegtbildkamera mittels der Fernsteuereinheit erreichen zu können, ist es erforderlich, eine Vielzahl einzustellender Parameter einer Bewegtbildkamera mittels der Fernsteuereinheit verändern, momentane Einstellungen und Parameter der Bewegtbildkamera überblicken und ein Signal zum Steuern der Bewegtbildkamera zuverlässig und störungsfrei übertragen zu können. Gleichzeitig ist es jedoch gewünscht, die Fernsteuereinheit tragbar, leicht und kompakt auszubilden, um eine komfortable Handhabung und beispielsweise Bewegungen eines die Fernsteuereinheit bedienenden Kameraassistenten während einer Aufnahme zu ermöglichen. Jedoch schränkt das Erfordernis einer kompakten Ausbildung die Möglichkeiten zum Anordnen von Elementen zur Bedienung der Fernsteuereinheit oder zum Überprüfen von Einstellungen und Parametern der Bewegtbildkamera an der Fernsteuereinheit ein.

Aus US 2008/284899 A1 ist eine Fernsteuereinheit zum Steuern einer elektronischen Bewegtbildkamera bekannt, die an einer ersten Seite einen Griffabschnitt und an einer entgegengesetzten zweiten Seite ein Bedienelement für die Bewegtbildkamera aufweist, wobei ein Anzeigeabschnitt sich entlang einer Grundebene von dem Griffabschnitt zu der zweiten Seite der Fernsteuereinheit erstreckt. Der Anzeigeabschnitt weist an seiner Vorderseite ein Display auf und ist orthogonal zu einer Betrachtungsachse der Fernsteuereinheit ausgerichtet. Die Fernsteuereinheit ist flach ausgebildet und kann auf einer horizontalen Ablageebene schräg abgelegt werden.

Aus US 2004/125553 A1 ist es bekannt, unterschiedliche Funkmodule lösbar an einem Computer zu befestigen.

Aus US 5 537 175 A ist es bekannt, ein Zubehörteil an der Oberseite einer Kamera durch Einschnappen zu befestigen.

Aus JP 2000 050143 A ist es bekannt, eine Fernsteuereinheit in einen Tragegriff einer Kamera einzustecken und die derart befestigte Fernsteuereinheit über ein Scharnier in einen gewünschten Winkel zu verstellen.

Es ist eine Aufgabe der Erfindung, eine Fernsteuereinheit zu schaffen, die eine komfortable und zuverlässige Steuerung einer Bewegtbildkamera sowie eine Überprüfung aktueller Einstellungen der Bewegtbildkamera bei kompakter Ausbildung ermöglicht.

Diese Aufgabe wird gelöst durch eine Fernsteuereinheit mit den Merkmalen des Anspruchs 1.

Die Fernsteuereinheit umfasst einen an einer ersten Seite der Fernsteuereinheit angeordneten Griffabschnitt zum Halten der Fernsteuereinheit, einen an einer der ersten Seite entgegengesetzten zweiten Seite der Fernsteuereinheit angeordneten Verlängerungsabschnitt und einen sich entlang einer Grundebene von dem Griffabschnitt zu der zweiten Seite der Fernsteuereinheit erstreckenden Anzeigeabschnitt, wobei der Anzeigeabschnitt eine Vorderseite und eine Rückseite aufweist. Der Anzeigeabschnitt weist an seiner Vorderseite ein Display auf, das dazu ausgebildet ist, eingestellte Steuerbefehle und/oder Werte von Parametern der Bewegtbildkamera anzuzeigen, wobei das Display orthogonal zu einer Betrachtungsachse der Fernsteuereinheit ausgerichtet ist. Der Verlängerungsabschnitt ragt an der zweiten Seite der Fernsteuereinheit von dem Anzeigeabschnitt entlang der Betrachtungsachse weg. Ferner weist der Verlängerungsabschnitt eine von dem Griffabschnitt weg weisende Bedienseite auf, an welcher ein drehbares Bedienelement zum Einstellen von Steuerbefehlen für die Bewegtbildkamera angeordnet ist.

Die Fernsteuereinheit weist somit einen gewissermaßen zentral angeordneten Anzeigeabschnitt auf, an dessen Vorderseite ein Display angebracht ist, wobei ein Benutzer der Fernsteuereinheit entlang der Betrachtungsachse der Fernsteuereinheit senkrecht auf das Display blicken und eingestellte Steuerbefehle und/oder Werte von Parametern der Bewegtbildkamera überprüfen kann. An der ersten Seite der Fernsteuereinheit schließt sich an diesen Anzeigeabschnitt ein Griffabschnitt zum Halten der Fernsteuereinheit an. Insbesondere kann die Fernsteuereinheit dadurch einhändig gehalten werden, wobei der Anzeigeabschnitt und das Display durch das Halten der Fernsteuereinheit an einem eigens dafür vorgesehenen Griffabschnitt während des Gebrauchs nicht durch eine Hand des Benutzers verdeckt werden. Der Griffabschnitt kann sich in einer Gebrauchslage der Fernsteuereinheit insbesondere an einer linken Seite der Fernsteuereinheit befinden, so dass die Fernsteuereinheit mit der linken Hand gehalten werden kann. Grundsätzlich ist es jedoch auch möglich, dass der Griffabschnitt in der Gebrauchslage der Fernsteuereinheit rechts angeordnet ist.

Durch die Möglichkeit, die Fernsteuereinheit mit einer Hand an dem Griffabschnitt zu halten, kann die andere Hand zur Bedienung der Fernsteuereinheit und zum Einstellen von Steuerbefehlen über das drehbare Bedienelement frei bleiben. Die Anordnung des Bedienelements an der von dem Griffabschnitt weg weisenden Bedienseite des Verlängerungsabschnitts, welcher an der zweiten Seite der Fernsteuereinheit von dem Anzeigeabschnitt weg ragt, ermöglicht es zudem, das drehbare Bedienelement mit der freien Hand zu betätigen, ohne zum Einstellen von Steuerbefehlen in die Nähe des Displays fassen oder Einstellungen an dem Anzeigeabschnitt vornehmen zu müssen. Ein Benutzer kann die Fernsteuereinheit somit an dem Griffabschnitt halten und entlang der Betrachtungsachse das Display beobachten, um gleichzeitig an der von dem Griffabschnitt weg weisenden Bedienseite mittels des drehbaren Bedienelements Steuerbefehle für die Bewegtbildkamera einzustellen. Der Griffabschnitt kann ferner von dem Benutzer hintergreifbar sein, so dass die Fernsteuereinheit komfortabel mit zueinander im Wesentlichen parallel und senkrecht zu der Grundebene der Fernsteuereinheit ausgerichteten Handflächen gehalten und bedient werden kann. Die jeweiligen mittels des drehbaren Bedienelements eingestellten Steuerbefehle können zudem in Echtzeit an dem Display angezeigt werden, um dem Benutzer mittels des Displays eine umfangreiche Kontrolle der Einstellungen der Bewegtbildkamera zu ermöglichen.

Die Fernsteuereinheit ist dazu ausgebildet, auf einer horizontalen Ablageebene derart in einer stabilen Schrägstandposition abstellbar zu sein, dass die Betrachtungsachse der Fernsteuereinheit die Ablageebene in einem spitzen Ausrichtungswinkel zwischen 25 Grad und 60 Grad schneidet, beispielsweise in einem Winkel von 30 Grad oder von 45 Grad.

Indem die Betrachtungsachse der Fernsteuereinheit in deren Schrägstandposition in einem spitzen Ausrichtungswinkel zu der Horizontalen ausgerichtet ist, kann das sich senkrecht zu der Betrachtungsachse erstreckende Display bei abgestellter Fernsteuereinheit geneigt zu der Vertikalen ausgerichtet sein. Ein Benutzer der Fernsteuereinheit kann dadurch die Fernsteuereinheit während einer Aufnahme beispielsweise kurzzeitig auf einem Tisch abstellen und das Display komfortabel unter einem natürlichen Blickwinkel betrachten, um die Aufnahme und die Einstellungen der Bewegtbildkamera überwachen zu können.

Eine Oberkante des Anzeigeabschnitts, insbesondere des Displays, ist bei abgestellter Fernsteuereinheit horizontal ausgerichtet. Dementsprechend kann der Anzeigeabschnitt und/oder das Display bei in der Schrägstandposition abgestellter Fernsteuereinheit gegenüber der Vertikalen um eine horizontal und in der Grundebene der Fernsteuereinheit oder parallel zu der Grundebene der Fernsteuereinheit verlaufende Achse gekippt sein, ohne jedoch um eine senkrecht zu der Grundebene ausgerichtete Achse gedreht zu sein. Dieses Kippen des Anzeigeabschnitts kann sich insbesondere auf einen Vergleich mit einer Ausrichtung der Fernsteuereinheit beziehen, in welcher die Grundebene vertikal ausgerichtet ist. Auf dem Display dargestellte Informationen können dadurch in der Schrägstandposition von dem Benutzer abgelesen werden, ohne dass die Informationen um die Betrachtungsachse verdreht dargestellt sind.

Weitere Ausführungsformen sind den abhängigen Ansprüchen, der Beschreibung sowie den Zeichnungen zu entnehmen.

Bei einigen Ausführungsformen kann der Anzeigeabschnitt im Wesentlichen plan oder gekrümmt ausgebildet sein. Insbesondere kann der Anzeigeabschnitt plan ausgebildet sein und sich entlang oder parallel zu der Grundebene erstrecken, so dass der Anzeigeabschnitt, insbesondere die Vorderseite des Anzeigeabschnitts, senkrecht zu der Betrachtungsachse der Fernsteuereinheit ausgerichtet sein kann. Der Anzeigeabschnitt kann jedoch, insbesondere an dessen Vorderseite, auch zumindest abschnittsweise gekrümmt ausgebildet sein, so dass beispielsweise ein zentraler und im Wesentlichen plan ausgebildeter Abschnitt des Anzeigeabschnitts, an welchem das Display angeordnet ist, über seitliche und gekrümmte Abschnitte mit dem Griffabschnitt und dem Verlängerungsabschnitt verbunden sein kann.

Insbesondere kann das Display bei einigen Ausführungsformen in der Grundebene der Fernsteuereinheit oder parallel zu der Grundebene der Fernsteuereinheit ausgerichtet sein. Das Display kann somit senkrecht zu der Betrachtungsachse der Fernsteuereinheit ausgerichtet sein, so dass ein entlang der Betrachtungsachse blickender Benutzer von dem Display angezeigte Informationen komfortabel ablesen kann. Eine solche Ausrichtung des Displays kann sowohl bei einem im Wesentlichen plan als auch bei einem gekrümmt ausgebildeten Anzeigeabschnitt vorgesehen sein.

Die Bedienseite kann bei einigen Ausführungsformen senkrecht zu der Grundebene ausgerichtet sein. Dies ermöglicht es, das drehbare Bedienelement von einer parallel zu der Grundebene ausgerichteten Richtung zu greifen und zu betätigen, so dass der Anzeigeabschnitt und das Display während eines Einstellens von Steuerbefehlen mittels des drehbaren Bedienelements unverdeckt und vollständig sichtbar bleiben können. Zudem kann das Bedienelement bei einer solchen Ausrichtung der Bedienseite komfortabel und mit einer natürlichen Handhaltung betätigt werden, während die Fernsteuereinheit an dem entgegengesetzten Griffabschnitt gehalten wird.

Bei einigen Ausführungsformen kann der Verlängerungsabschnitt senkrecht von dem Anzeigeabschnitt weg ragen und/oder senkrecht zu der Grundebene ausgerichtet sein. Insbesondere können der Anzeigeabschnitt parallel zu der Grundebene und der Verlängerungsabschnitt senkrecht zu der Grundebene ausgerichtet sein. Der Anzeigeabschnitt kann zudem in einem Querschnitt, insbesondere in jedem Querschnitt, senkrecht zu der Grundebene rechteckig ausgebildet sein und/oder der Verlängerungsabschnitt kann in einem Querschnitt, insbesondere in jedem Querschnitt, parallel zu der Grundebene rechteckig ausgebildet sein. Der Anzeigeabschnitt kann ferner eine konstante Dicke senkrecht zu der Grundebene aufweisen.

Der Griffabschnitt kann sich an einer Rückseite der Fernsteuereinheit über die Rückseite des Anzeigeabschnitts hinaus erstrecken.

Der Griffabschnitt kann bei einigen Ausführungsformen dazu ausgebildet sein, von einer Hand des Benutzers an drei Seiten umfänglich umgriffen zu werden. Insbesondere kann der Griffabschnitt von einer Vorderseite der Fernsteuereinheit zu deren Rückseite umfänglich von einer Hand des Benutzers umgreifbar sein, wobei der Griffabschnitt an der Vorderseite der Fernsteuereinheit an einem Handballen des Benutzers anliegen und von dessen Fingern umgriffen werden kann. Ein vollständiges Umgreifen des Griffabschnitts kann jedoch durch den sich an den Griffabschnitt anschließenden Anzeigeabschnitt der Fernsteuereinheit unterbunden sein.

Ferner kann der Griffabschnitt bei einigen Ausführungsformen an der Rückseite der Fernsteuereinheit in eine Eingriffsmulde übergehen. Insbesondere kann ein Benutzer der Fernsteuereinheit den Griffabschnitt mit der haltenden Hand umgreifen und mit einem oder mehreren Fingern in eine solche Eingriffsmulde eingreifen, um ein komfortables und sicheres Halten der Fernsteuereinheit zu ermöglichen.

Bei einigen Ausführungsformen kann der Griffabschnitt zumindest abschnittsweise gekrümmt ausgebildet sein. Insbesondere kann der Griffabschnitt zumindest abschnittsweise zylindrisch und/oder tonnenförmig ausgebildet sein. Durch eine solche Ausbildung kann der Griffabschnitt großflächig an einer umgreifenden Hand eines Benutzers anliegen, wobei zudem ein natürliches Umgreifen des Griffabschnitts ermöglicht werden kann.

Bei einigen Ausführungsformen kann die Fernsteuereinheit ferner ein Funkmodul umfassen, welches dazu ausgebildet ist, die eingestellten Steuerbefehle drahtlos an die Bewegtbildkamera zu übermitteln. Alternativ oder zusätzlich kann das Funkmodul dazu ausgebildet sein, Werte von Parametern der Bewegtbildkamera drahtlos zu empfangen. Insbesondere können die Parameter einen Fokuswert, eine Brennweite, eine Irisblendenöffnung und/oder einen Zoom-Faktor betreffen. Die mittels des drehbaren Bedienelements einstellbaren Steuerbefehle können insbesondere Soll-Werte für die genannten Parameter und/oder für einen der genannten Parameter darstellen.

Ein solches Funkmodul kann folglich dazu vorgesehen sein, eine Kommunikation zwischen der Fernsteuereinheit und der Bewegtbildkamera zu ermöglichen, um Steuerbefehle übertragen und/oder aktuelle Einstellungen oder Werte von Parametern der Bewegtbildkamera empfangen zu können. Von dem Funkmodul übertragene und/oder empfangene Informationen können insbesondere auf dem Display angezeigt werden, so dass ein Benutzer momentane oder vorgenommene Einstellungen der Bewegtbildkamera an der Fernsteuereinheit überprüfen kann.

Das Funkmodul kann beispielsweise dazu ausgebildet sein, über eine Bluetooth-Verbindung, eine WLAN/WiFi-Verbindung und/oder eine Mobilfunkverbindung drahtlos mit der Bewegtbildkamera zu kommunizieren.

Bei einigen Ausführungsformen kann das Funkmodul eine Antenne umfassen, wobei die Antenne an dem Verlängerungsabschnitt der Fernsteuereinheit angeordnet sein kann. Eine solche Anordnung der Antenne ermöglicht es insbesondere, die Antenne beabstandet zu dem Anzeigeabschnitt anzubringen und eine Störung des Funksignals durch in dem Anzeigeabschnitt angeordnete elektronische Komponenten und/oder ein Metallgehäuse der Fernsteuereinheit zu verhindern, so dass eine gute Abstrahl- und Empfangscharakteristik des Funkmoduls erreicht werden kann. Zudem kann durch eine Anordnung der Antenne des Funkmoduls an dem Verlängerungsabschnitt eine Oberseite des Anzeigeabschnitts, an welchem die Antenne herkömmlicherweise angeordnet wird, freigehalten werden und für andere Anwendungen zur Verfügung stehen, wie nachstehend noch erläutert ist.

Die Antenne des Funkmoduls kann bei einigen Ausführungsformen an einem Endabschnitt des Verlängerungsabschnitts angeordnet sein, welcher von dem Anzeigeabschnitt weg weist. Der Abstand zwischen der Antenne und dem Anzeigeabschnitt entlang der Betrachtungsachse der Fernsteuereinheit kann dadurch maximiert werden, um etwaige Störungen des Funksignals aufgrund eines Metallgehäuses oder elektronischer Komponenten des Anzeigeabschnitts zuverlässig zu vermeiden. Zudem befindet sich eine derart angeordnete Antenne nicht in einem Übergangsbereich zwischen dem Verlängerungsabschnitt und dem Anzeigeabschnitt, so dass beispielsweise Bewegungen der Hand des Benutzers während der Bedienung der Fernsteuereinheit, um zunächst einen Steuerbefehl mittels des drehbaren Bedienelements und daraufhin Einstellungen an dem Anzeigeabschnitt, beispielsweise an dem Display, vorzunehmen, nicht durch die Antenne beeinträchtigt sind.

Die Antenne des Funkmoduls kann bei einigen Ausführungsformen an einer Oberseite des Verlängerungsabschnitts angeordnet sein und/oder von einer Oberseite des Verlängerungsabschnitts abstehen. Insbesondere kann die Antenne ferner länglich und/oder stabartig ausgebildet sein.

Das Funkmodul kann bei einigen Ausführungsformen lösbar mit dem Verlängerungsabschnitt der Fernsteuereinheit verbunden sein. Zudem kann das Funkmodul wahlweise mit dem Verlängerungsabschnitt der Fernsteuereinheit verbindbar sein.

Durch eine lösbare Verbindung des Funkmoduls mit der Fernsteuereinheit können insbesondere verschiedene Funkmodule wahlweise mit der Fernsteuereinheit verbindbar sein, um beispielsweise eine Kommunikation der Fernsteuereinheit über verschiedene Funkstandards und/oder Funkfrequenzen ermöglichen zu können. Beispielsweise kann die Fernsteuereinheit an eine zu steuernde Bewegtbildkameras anpassbar sein, welche zur Kommunikation über einen bestimmten Funkstandard bzw. eine bestimmte Funkfrequenz ausgebildet ist, indem ein über den entsprechenden Funkstandard bzw. die entsprechende Funkfrequenz kommunizierendes Funkmodul mit dem Verlängerungsabschnitt verbunden wird. Die Fernsteuereinheit kann somit nicht lediglich zur Steuerung solcher Bewegtbildkameras genutzt werden, die einen von der Fernsteuereinheit vorgegebenen Funkstandard und/oder eine von der Fernsteuereinheit vorgegebenen Funkfrequenz verwenden, sondern die Fernsteuereinheit kann umgekehrt flexibel an einen jeweiligen von einer zu steuernden Bewegtbildkamera verwendeten Funkstandard und/oder eine von der Bewegtbildkamera verwendete Funkfrequenz angepasst werden.

Bei einigen Ausführungsformen kann der Verlängerungsabschnitt der Fernsteuereinheit eine Aufnahme aufweisen, in welche das Funkmodul einsetzbar ist. Insbesondere kann der Verlängerungsabschnitt an einer der Bedienseite entgegengesetzten Seite eine solche Aufnahme aufweisen, in welcher das Funkmodul lösbar aufgenommen sein kann. Die Aufnahme kann ferner an einer Oberseite des Verlängerungsabschnitts offen sein, so dass das Funkmodul an der Oberseite in die Aufnahme eingesetzt werden kann.

Das in die Aufnahme eingesetzte Funkmodul kann bei einigen Ausführungsformen werkzeuglos aus der Aufnahme entnehmbar sein. Zudem kann das Funkmodul werkzeuglos in die Aufnahme einsetzbar sein. Dies kann insbesondere ein schnelles und unkompliziertes Anpassen der Fernsteuereinheit ermöglichen, wenn beispielsweise während eines Drehs verschiedene Szenen mit verschiedenen Bewegtbildkameras aufgenommen werden, die über verschiedene Funkstandards kommunizieren. Insbesondere kann das Funkmodul an einer Oberseite des Verlängerungsabschnitts manuell in die Aufnahme einsetzbar und in Richtung der Oberseite des Verlängerungsabschnitts manuell aus der Aufnahme herausschiebbar und/oder herausziehbar sein, ohne dass ein Werkzeug erforderlich ist.

Das Funkmodul kann bei einigen Ausführungsformen von einer Oberseite des Verlängerungsabschnitts in die Aufnahme einsetzbar sein. Die Aufnahme kann dementsprechend an einer Oberseite des Verlängerungsabschnitts offen sein. Wie bereits erläutert, kann an der Oberseite des Verlängerungsabschnitts insbesondere auch eine Antenne des Funkmoduls angeordnet sein und/oder von der Oberseite abstehen. Die Antenne kann daher außerhalb der Aufnahme angeordnet sein und/oder aus der Aufnahme herausragen, wenn das Funkmodul in die Aufnahme eingesetzt ist.

Das Funkmodul kann bei einigen Ausführungsformen durch eine geradlinige Bewegung in die Aufnahme einsetzbar sein. Die geradlinige Bewegung kann entlang einer parallel zu der Grundebene ausgerichteten Richtung erfolgen und insbesondere von einer Oberseite des Verlängerungsabschnitts in die Aufnahme führen.

Bei einigen Ausführungsformen kann das Funkmodul einen quaderförmigen Funkmodulkörper aufweisen, welcher in die Aufnahme einsetzbar ist. Bei solchen Ausführungsformen kann das Funkmodul ferner eine Antenne aufweisen, welche von dem Funkmodulkörper absteht. Der Funkmodulkörper kann insbesondere derart in die Aufnahme einsetzbar sein, dass eine von dem Funkmodulkörper weg ragende Antenne an einer Oberseite des Verlängerungsabschnitts absteht. Zudem kann die Antenne an einem Abschnitt des Funkmodulkörpers angeordnet sein, welcher dem Anzeigeabschnitt bei in die Aufnahme eingesetztem Funkmodulkörper entgegengesetzt ist.

Die Aufnahme kann das eingesetzte Funkmodul bei einigen Ausführungsformen fünfseitig abstützen. Insbesondere kann die Aufnahme den Funkmodulkörper des eingesetzten Funkmoduls fünfseitig abstützen. Das Funkmodul kann durch eine solche Abstützung ausschließlich entlang einer Richtung in die Aufnahme einsetzbar und aus der Aufnahme entnehmbar sein, so dass das Funkmodul während des Gebrauchs der Fernsteuereinheit sicher in der Aufnahme gehalten sein, jedoch auf einfache Weise bewusst aus der Aufnahme entnommen werden kann. Alternativ oder zusätzlich kann das Funkmodul, insbesondere der Funkmodulkörper, zudem in der Aufnahme einrasten, um ein ungewolltes Lösen oder Bewegen des Funkmoduls während des Gebrauchs der Fernsteuereinheit zu verhindern.

Die Aufnahme kann an einer dem drehbaren Bedienelement abgewandten Seite des Verlängerungsabschnitts ausgebildet sein. Die Bedienseite kann daher insbesondere ausschließlich zum Anordnen des drehbaren Bedienelements zur Verfügung stehen. Ferner kann das Funkmodul durch eine solche Anordnung der Aufnahme zwischen dem Griffabschnitt und dem Bedienelement angeordnet sein, so dass unbeabsichtigte Berührungen des Funkmoduls während des Gebrauchs der Fernsteuereinheit vermieden werden können.

Das Funkmodul kann bei einigen Ausführungsformen wenigstens eine Breitseite aufweisen, die eine Seitenfläche des Funkmoduls mit der größten Flächenausdehnung bildet, wobei die Aufnahme das eingesetzte Funkmodul an der dem drehbaren Bedienelement abgewandten Seite mit zumindest zwei senkrecht zueinander ausgerichteten Randabschnitten übergreift, so dass die wenigstens eine Breitseite im Wesentlichen sichtbar bleibt.

Indem die Breitseite des Funkmoduls durch zumindest zwei senkrecht zueinander ausgerichtete Randabschnitte übergriffen ist, kann das Funkmodul an der dem drehbaren Bedienelement abgewandten Seite des Verlängerungsabschnitts sicher in der Aufnahme gehalten sein. Die Randabschnitte der Aufnahme können dazu beispielsweise als Stege und/oder Zungen ausgebildet sein. Da die Breitseite durch die Randabschnitte bei solchen Ausführungsformen jedoch nicht vollständig überdeckt wird, sondern im Wesentlichen sichtbar bleibt, kann ein Benutzer das Funkmodul wahlweise über dessen Breitseite und beispielsweise mittels eines Daumens aus der Aufnahme herausschieben. Insbesondere muss das Funkmodul somit zum Entnehmen aus der Aufnahme nicht an der Antenne herausgezogen werden.

Zudem kann durch eine derartige Ausbildung der Aufnahme an der dem Bedienelement abgewandten Seite eine etwaige Beschriftung oder Kennzeichnung des Funkmoduls sichtbar bleiben. Beispielsweise kann ein Benutzer dadurch unmittelbar überprüfen, welches Funkmodul in die Aufnahme eingesetzt ist und/oder über welchen Funkstandard und/oder über welche Funkfrequenz eine Kommunikation mittels der Fernsteuereinheit möglich ist.

Die Aufnahme kann bei einigen Ausführungsformen an einer dem Anzeigeabschnitt abgewandten Seite teilweise geöffnet sein und das eingesetzte Funkmodul abschnittsweise übergreifen. Durch ein solches abschnittsweises Übergreifen kann das Funkmodul an der dem Anzeigeabschnitt abgewandten Seite sicher in der Aufnahme gehalten sein, während gleichzeitig ein Zugriff zum Entnehmen des Funkmoduls aus der Aufnahme und/oder ein Überprüfen einer etwaigen Beschriftung des Funkmoduls ermöglicht werden kann.

Die Fernsteuereinheit kann bei einigen Ausführungsformen mehrere Funkmodule umfassen, von denen eines wahlweise in die Aufnahme einsetzbar ist, wobei ein erstes Funkmodul der mehreren Funkmodule dazu ausgebildet ist, über einen ersten Funkstandard und/oder eine erste Funkfrequenz zu kommunizieren, und wobei ein zweites Funkmodul der mehreren Funkmodule dazu ausgebildet ist, über einen zweiten Funkstandard und/oder eine zweite Funkfrequenz zu kommunizieren. Der erste Funkstandard kann sich ferner von dem zweiten Funkstandard unterscheiden und/oder die erste Funkfrequenz kann sich von der zweiten Funkfrequenz unterscheiden. Insbesondere können sämtliche der mehreren Funkmodule wahlweise in die Aufnahme einsetzbar sein, wobei jedoch stets lediglich ein einziges der mehreren Funkmodule in der Aufnahme aufgenommen und mit der Fernsteuereinheit verbunden sein kann. Wie bereits erläutert, kann die Fernsteuereinheit durch wahlweises Einsetzen eines der mehreren Funkmodule in die Aufnahme dazu angepasst werden, über den jeweiligen von dem Funkmodul verwendeten Funkstandard bzw. über die jeweilige Funkfrequenz zu kommunizieren. Dies ermöglicht es, die Fernsteuereinheit wahlweise und flexibel an verschiedene Bewegtbildkameras anzupassen, um eine Vielzahl von Bewegtbildkameras mittels der Fernsteuereinheit steuern zu können.

Bei einigen Ausführungsformen kann der Anzeigeabschnitt der Fernsteuereinheit eine Oberseite aufweisen, welche sich von dem Griffabschnitt zu der zweiten Seite der Fernsteuereinheit erstreckt, wobei an der Oberseite des Anzeigeabschnitts eine Befestigungsvorrichtung zum Befestigen einer Zubehöreinrichtung, insbesondere eines Beobachtungsmonitors, angeordnet sein kann.

Eine solche Befestigungsvorrichtung ermöglicht es insbesondere, die Funktionalität der Fernsteuereinheit durch eine zusätzliche Zubehöreinrichtung zu erweitern. Beispielsweise kann an der Oberseite des Anzeigeabschnitts mittels der Befestigungsvorrichtung ein Beobachtungsmonitor befestigbar sein, mittels dessen ein Benutzer der Fernsteuereinheit einen von der Bewegtbildkamera aufgenommenen Bildausschnitt überprüfen und beobachten kann. Die entsprechenden Bilddaten können insbesondere mittels des bereits erwähnten Funkmoduls von der Kamera empfangen werden. Einen solchen Beobachtungsmonitor kann der Benutzer der Fernsteuereinheit beispielsweise dazu nutzen, die Aufnahme zu überprüfen oder zu verfolgen, um gegebenenfalls Anpassungen der Einstellungen der Bewegtbildkamera mittels der Fernsteuereinheit vorzunehmen. Insbesondere kann eine solche Befestigungsvorrichtung bei Ausführungsformen vorgesehen sein, bei welchen eine Antenne eines Funkmoduls, wie vorstehend erläutert, an dem Verlängerungsabschnitt angeordnet ist, so dass die Oberseite des Anzeigeabschnitts, anders als bei herkömmlichen Fernsteuereinheiten, für eine wahlweise anbringbare Zubehöreinrichtung freigehalten werden kann.

Bei einigen Ausführungsformen kann die Befestigungsvorrichtung dazu ausgebildet sein, die Zubehöreinrichtung durch einen formschlüssigen Eingriff oder durch wenigstens ein Befestigungsmittel oder durch eine Kombination hiervon zu befestigen. Beispielsweise kann die Zubehöreinrichtung auf die Oberseite des Anzeigeabschnitts aufschiebbar, aufsteckbar und/oder an der Oberseite des Anzeigeabschnitts einhakbar sein, um einen formschlüssigen Eingriff zu erreichen. Alternativ oder zusätzlich kann die Zubehöreinrichtung beispielsweise an der Oberseite des Anzeigeabschnitts verschraubbar sein.

Die Oberseite des Anzeigeabschnitts kann bei einigen Ausführungsformen eine plane Oberfläche aufweisen. Die plane Oberfläche kann ferner quer, insbesondere senkrecht, zu der Grundebene und/oder dem Anzeigeabschnitt ausgerichtet sein.

Bei einigen Ausführungsformen kann der Griffabschnitt an einer Oberseite eine plane Oberfläche aufweisen, welche sich an die Oberfläche des Anzeigeabschnitts anschließt und mit der Oberfläche des Anzeigeabschnitts in einer gemeinsamen Ebene verläuft. Insbesondere können der Griffabschnitt und der Anzeigeabschnitt bzw. deren Oberflächen an deren Oberseiten eine mittels der Befestigungsvorrichtung befestigte Zubehöreinrichtung gemeinsam abstützen.

Die Befestigungsvorrichtung kann bei einigen Ausführungsformen eine Befestigungsschiene umfassen. Insbesondere kann eine solche Befestigungsschiene einen formschlüssigen Eingriff einer Zubehöreinrichtung ermöglichen, welche über die Befestigungsschiene auf die Fernsteuereinheit aufschiebbar und/oder an der Befestigungsschiene einhakbar sein kann.

Die Fernsteuereinheit kann bei einigen Ausführungsformen zumindest eine Zubehöreinrichtung umfassen, welche durch ein Aufschieben auf die Befestigungsschiene oder durch ein Einhaken an der Befestigungsschiene an der Oberseite des Anzeigeabschnitts befestigbar ist. Insbesondere kann dadurch ein schnelles und werkzeugloses Befestigen der Zubehöreinrichtung, bei welcher es sich insbesondere um einen Beobachtungsmonitor handeln kann, ermöglicht werden.

Alternativ oder zusätzlich kann die Befestigungsvorrichtung bei einigen Ausführungsformen zumindest eine an der Oberseite des Anzeigeabschnitts ausgebildete Befestigungsvertiefung umfassen. Insbesondere kann es sich bei einer solchen Befestigungsvertiefung um eine Schraubbohrung handeln. Beispielsweise kann eine Zubehöreinrichtung dadurch an der Oberseite des Anzeigeabschnitts festschraubbar und sicher, jedoch wahlweise lösbar, mit der Fernsteuereinheit verbindbar sein.

Die Fernsteuereinheit kann bei einigen Ausführungsformen zumindest eine Zubehöreinrichtung umfassen, welche mittels eines in die Befestigungsvertiefung einführbaren Befestigungsmittels an der Oberseite des Anzeigeabschnitts befestigbar ist. Insbesondere kann die Zubehöreinrichtung mittels einer in die Befestigungsvertiefung einführbaren Befestigungsschraube an der Oberseite des Anzeigeabschnitts befestigbar sein.

Ferner kann die Fernsteuereinheit bei einigen Ausführungsformen zumindest eine Zubehöreinrichtung umfassen, welche auf eine Befestigungsschiene der Befestigungsvorrichtung aufschiebbar und/oder an der Befestigungsschiene einhakbar ist, wobei die Zubehöreinrichtung zusätzlich mittels eines in die Befestigungsvertiefung einführbaren Befestigungsmittels an der Oberseite des Anzeigeabschnitts befestigbar ist.

Ein wahlweise mit der Fernsteuereinheit als Zubehöreinrichtung verbindbarer Befestigungsmonitor kann insbesondere ein Display umfassen, welches sich in einer Beobachtungsebene erstreckt, wobei die Beobachtungsebene bei an der Fernsteuereinheit befestigtem Beobachtungsmonitor senkrecht, schräg oder parallel zu der Grundebene ausgerichtet sein kann. Insbesondere kann sich die Beobachtungsebene schräg von der Vorderseite des Anzeigeabschnitts nach oben in Richtung der Rückseite des Anzeigeabschnitts erstrecken, so dass ein Benutzer der Fernsteuereinheit sowohl das Display des Anzeigeabschnitts als auch das Display des Beobachtungsmonitors komfortabel beobachten kann. Dazu kann die Oberfläche des Anzeigeabschnitts, an welcher der Befestigungsmonitor befestigbar ist, beispielsweise schräg zu der Grundebene ausgerichtet sein. Alternativ dazu kann die Oberfläche des Anzeigeabschnitts jedoch beispielsweise auch senkrecht zu der Grundebene ausgerichtet sein und der Befestigungsmonitor kann ein im befestigten Zustand schräg zu der Oberfläche des Anzeigeabschnitts ausgerichtetes Display aufweisen.

Die Betrachtungsachse der Fernsteuereinheit kann die Ablageebene bei abgestellter Fernsteuereinheit bei einigen Ausführungsformen in Richtung der Rückseite der Fernsteuereinheit schneiden. Alternativ oder zusätzlich kann das Display des Anzeigeabschnitts bei abgestellter Fernsteuereinheit bei einigen Ausführungsformen nach oben weisen. Ein entlang der Betrachtungsachse der Fernsteuereinheit blickender Benutzer kann das Display somit komfortabel beobachten, wenn die Fernsteuereinheit auf der horizontalen Ablageebene abgestellt ist.

Bei einigen Ausführungsformen kann der Verlängerungsabschnitt der Fernsteuereinheit an einer Unterseite einen planen Stützabschnitt aufweisen. Alternativ oder zusätzlich kann der Anzeigeabschnitt der Fernsteuereinheit an einer Unterseite einen planen Stützabschnitt aufweisen. Darüber hinaus kann alternativ oder zusätzlich der Griffabschnitt der Fernsteuereinheit an einer Unterseite einen planen Stützabschnitt aufweisen. Der jeweilige Stützabschnitt kann in einem Anordnungswinkel zu der Grundebene der Fernsteuereinheit ausgerichtet sein, wobei der Anordnungswinkel des jeweiligen Stützabschnitts einem Wert von 90 Grad abzüglich des spitzen Ausrichtungswinkels der Betrachtungsachse entsprechen kann.

Insbesondere kann die Fernsteuereinheit auf dem jeweiligen planen Stützabschnitt aufliegend abstellbar sein, so dass sich aufgrund der Ausrichtung des jeweiligen Stützabschnitts in dem Anordnungswinkel zu der Grundebene der spitze Ausrichtungswinkel der Betrachtungsachse zu der Ablageebene ergeben kann.

Insbesondere können der Anzeigeabschnitt und/oder der Griffabschnitt einen in dem Anordnungswinkel zu der Grundebene ausgerichteten Stützabschnitt aufweisen, welcher von einer zu der Rückseite der Fernsteuereinheit weisenden Kante des Anzeigeabschnitts bzw. des Griffabschnitts gebildet ist. Die Fernsteuereinheit kann auf einem flächigen Stützabschnitt des Verlängerungsabschnitts und einer solchen Kante des Anzeigeabschnitts und/oder des Griffabschnitts abstellbar sein. Alternativ dazu können die Kanten des Anzeigeabschnitts oder des Griffabschnitts jedoch auch eine rechtwinklige Ecke an der Unterseite der Fernsteuereinheit bilden, wobei die Fernsteuereinheit in der Schrägstandposition dennoch von den Kanten des Griffabschnitts und des Anzeigeabschnitts sowie einem in dem Ausrichtungswinkel zu der Grundebene ausgerichteten, insbesondere flächigen, Stützabschnitt des Verlängerungsabschnitts abgestützt sein kann.

Bei einigen Ausführungsformen kann die Fernsteuereinheit dazu ausgebildet sein, auf der horizontalen Ablagefläche wahlweise derart in einer stabilen Aufrechtposition abstellbar zu sein, dass die Betrachtungsachse der Fernsteuereinheit parallel zu der Ablageebene ausgerichtet ist. Der Anzeigeabschnitt der Fernsteuereinheit kann an der Unterseite einen planen weiteren Stützabschnitt aufweisen und/oder der Griffabschnitt der Fernsteuereinheit kann an einer Unterseite einen planen weiteren Stützabschnitt aufweisen, wobei der jeweilige weitere Stützabschnitt orthogonal zu der Grundebene der Fernsteuereinheit ausgerichtet ist. Insbesondere kann die Fernsteuereinheit durch solche weitere Stützabschnitte stabil in der Aufrechtstandposition auf der horizontalen Ablageebene abgestützt sein.

Ferner kann die Fernsteuereinheit bei einigen Ausführungsformen wahlweise in der Aufrechtstandposition und in der Schrägstandposition abstellbar sein. Beispielsweise kann ein Benutzer dadurch in Abhängigkeit von der Höhe der Ablageebene beim Abstellen der Fernsteuereinheit zwischen der Aufrechtstandposition und der Schrägstandposition wählen, um den Anzeigeabschnitt und/oder das Display komfortabel entlang der Betrachtungsachse beobachten zu können.

Durch Drehen des drehbaren Bedienelements kann bei einigen Ausführungsformen ein Steuerbefehl für einen Objektiv-Stellmotor der Bewegtbildkamera und/oder ein Steuerbefehl zum Verändern einer Fokuslage der Bewegtbildkamera einstellbar sein. Eine mittels der Fernsteuereinheit steuerbare Bewegtbildkamera kann dementsprechend einen oder mehrere Objektiv-Stellmotoren aufweisen, welche dazu ausgebildet sein können, einen jeweiligen Objektivring eines Objektivs der Bewegtbildkamera zu drehen, um dadurch einen Parameter der Bewegtbildkamera anzupassen. Insbesondere können durch solche Objektiv-Stellmotoren bzw. durch Drehen eines entsprechenden Objektivrings eine Fokuslage, eine Brennweite, eine Irisblendenöffnung und/oder ein Zoom-Faktor einstellbar sein.

Insbesondere kann durch Drehen des drehbaren Bedienelements eine Fokuslage der Bewegtbildkamera kontinuierlich veränderbar sein. Alternativ dazu können durch das drehbare Bedienelement jedoch auch andere Parameter der Bewegtbildkamera, insbesondere die bereits genannte Brennweite, eine Irisblendenöffnung oder ein Zoom-Faktor, einstellbar sein. Ferner kann es vorgesehen sein, dass der jeweilige mittels des drehbaren Bedienelements einstellbare Parameter der Bewegtbildkamera an der Fernsteuereinheit auswählbar ist, um beispielsweise einen während einer bestimmten Szene vornehmlich zu verändernden Parameter mittels des drehbaren Bedienelements anpassen zu können.

Bei einigen Ausführungsformen kann an dem Anzeigeabschnitt der Fernsteuereinheit zumindest ein weiteres Bedienelement zum Einstellen von weiteren Steuerbefehlen für die Bewegtbildkamera angeordnet sein. Insbesondere können an dem Anzeigeabschnitt eine oder mehrere Tasten und/oder ein oder mehrere Schieber zum Einstellen von weiteren Steuerbefehlen für die Bewegtbildkamera angeordnet sein. Das zumindest eine weitere Bedienelement kann insbesondere an der Vorderseite des Anzeigeabschnitts angeordnet sein, so dass ein Benutzer auch das weitere Bedienelement während eines Benutzens der Fernsteuereinheit im Blick halten kann, ohne die Fernsteuereinheit bewegen oder drehen zu müssen. Die mittels des weiteren Bedienelements eingestellten Steuerbefehle und/oder Werte von mittels des weiteren Bedienelements beeinflussbaren Parametern der Bewegtbildkamera können an dem Display anzeigbar sein, um eine Überprüfung dieser Parameter und Steuerbefehle zu ermöglichen. Alterativ oder zusätzlich kann es auch vorgesehen sein, dass der Anzeigeabschnitt eine dem weiteren Bedienelement zugeordnete Skala aufweist, so dass der eingestellte Steuerbefehl anhand der Position des weiteren Bedienelements oder einer an dem Bedienelement angebrachten Markierung relativ zu der Skala abgelesen werden kann.

Bei einigen Ausführungsformen kann durch Betätigen des zumindest einen weiteren Bedienelements ein Steuerbefehl für einen weiteren Objektiv-Stellmotor einstellbar sein. Beispielsweise kann bei solchen Ausführungsformen durch Betätigen des zumindest einen weiteren Bedienelements ein Soll-Wert für eine Irisblendenöffnung, einen Zoom-Faktor und/oder eine Brennweite der Bewegtbildkamera einstellbar sein. Insbesondere kann mittels des drehbaren Bedienelements eine Fokuslage der Bewegtbildkamera durch Ansteuern eines entsprechenden Objektiv-Stellmotors einstellbar sein, wobei die Fernsteuereinheit zumindest ein weiteres Bedienelement umfassen kann, mittels dessen eine Irisblendenöffnung, einen Zoom-Faktor und/oder eine Brennweite der Bewegtbildkamera durch Ansteuern eines entsprechenden Objektiv-Stellmotors der Bewegtbildkamera einstellbar sind bzw. ist.

Im Folgenden wird die Erfindung rein beispielhaft anhand eines Ausführungsbeispiels unter Bezugnahme auf die Zeichnungen erläutert.

Es zeigen:
- Fig. 1: eine schematische Darstellung einer Bewegtbildkamera,
- Fig. 2A und 2B: eine perspektivische Vorderansicht bzw. eine perspektivische Rückansicht einer Fernsteuereinheit zum Steuern der Bewegtbildkamera, wobei sich die Fernsteuereinheit von einer ersten Seite zu einer zweiten Seite erstreckt, und
- Fig. 3A und 3B: eine Seitansicht auf die zweite Seite bzw. auf die erste Seite der Fernsteuereinheit, wobei die Fernsteuereinheit in einer Schrägstandposition auf einer horizontalen Ablageebene abgestellt ist.

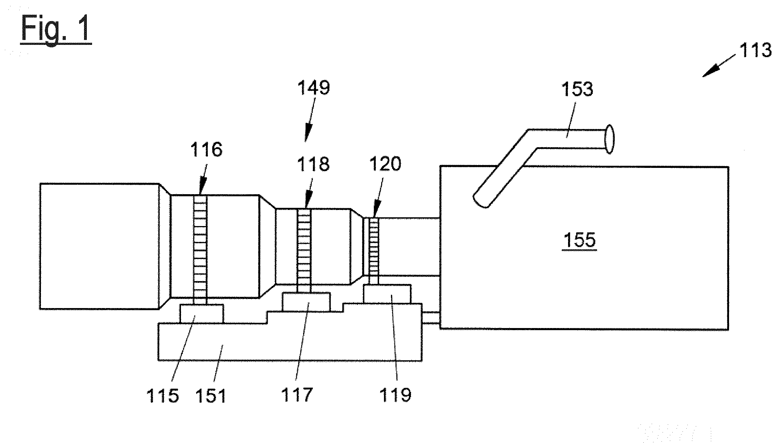

Fig. 1 zeigt eine Bewegtbildkamera 113, bei welcher es sich insbesondere um eine elektronische Bewegtbildkamera oder eine Filmkamera handeln kann. Die veranschaulichte Bewegtbildkamera 113 umfasst einen Kamerakörper 155, an welchem ein Wechselobjektiv 149 montiert ist. Dieses Wechselobjektiv 149 weist drei Objektivringe 116, 118 und 120 auf, die mittels jeweiliger externer Objektiv-Stellmotoren 115, 117 und 119 verstellt werden können. Beispielsweise kann der erste Objektivring 116 dazu vorgesehen sein, eine Fokuslage des Objektivs 149 einzustellen, während durch Drehen des zweiten Objektivrings 118 beispielsweise eine gewünschte Brennweiteneinstellung vorgenommen werden kann. Ferner kann der dritte Objektivring 120 insbesondere dazu vorgesehen sein, mittels des zugeordneten dritten Objektiv-Stellmotors 119 eine Irisblendenöffnung einstellen zu können. Die Stellmotoren 115, 117 und 119 sind Teil einer Objektivring-Antriebseinheit 151, welche mit dem Kamerakörper 155 verbunden ist (z.B. über Haltestangen), aber eine von der Bewegtbildkamera 113 separate und unabhängige Einheit sein kann. Die Stellmotoren 115, 117, 119 und die Objektivring-Antriebseinheit 151 sind jedoch über das verwendete Wechselobjektiv 149 einer jeweiligen Bewegtbildkamera 113 zugeordnet. Die Objektivring-Antriebseinheit 151 kann eine Kommunikationsschnittstelle und/oder eine Steuerschaltung zum Empfangen von Steuerbefehlen für die Bewegbildkamera 113 bzw. die Objektiv-Stellmotoren 115, 117 und 119 umfassen. Alternativ dazu kann eine solche Kommunikationsschnittstelle und/oder eine Steuerschaltung auch innerhalb des Kamerakörpers 155 angeordnet sein, wobei die Steuerbefehle an die Antriebseinheit 151 weitergeleitet werden können. Ferner ist an dem Kamerakörper 155 ein Sucher 153 angeordnet, mittels dessen ein die Bewegtbildkamera 113 führender Kameramann einen aufzunehmenden Bildausschnitt anvisieren kann.

Indem die Bewegtbildkamera 113 mit einem Wechselobjektiv 149 ausgestattet ist, welches mit dem Kamerakörper 155 verbindbar ist, können grundsätzlich auch andersartig ausgebildete Objektive 149 mit dem Kamerakörper 155 verbunden werden, um flexibel eine Bewegtbildkamera 113 bereitstellen zu können, die für eine aufzunehmende Szene optimale Einstellungen ermöglicht. Beispielsweise können auch Objektive 149 mit fester Brennweite vorgesehen sein, die lediglich zwei Objektivringe 116 und 120 zum Verstellen der Fokuslage sowie der Irisblendenöffnung mittels zugeordneter Stellmotoren 117 und 119 aufweisen. Alternativ dazu kann eine Bewegtbildkamera jedoch auch mit einem fest verbundenen Objektiv ausgebildet sein.

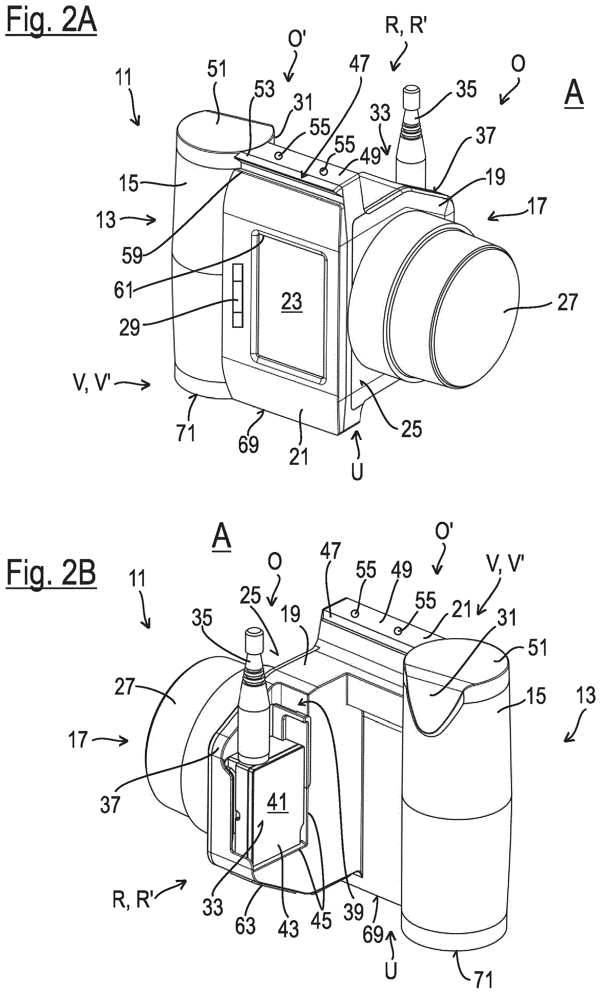

Während einer Aufnahme einer Szene ist es in der Regel vorgesehen, dass die Kamera 113 bzw. deren Objektiv 149 von einem Kameramann bewegt wird, um einen jeweiligen aufzunehmenden Bildausschnitt anzuvisieren. Entsprechende Anpassungen von Parametern der Bewegtbildkamera 113, die bei einer solchen Änderung des Bildausschnitts möglicherweise vorzunehmen sind, beispielsweise der Fokuslage, werden hingegen meist von einem Kameraassistenten oder Schärfezieher mittels einer Fernsteuereinheit 11 vorgenommen, welche dazu ausgebildet ist, entsprechende Steuerbefehle an die Bewegtbildkamera 113 und/oder die Antriebseinheit 151 zu übermitteln. Eine solche Fernsteuereinheit 11 erfordert eine kompakte Ausbildung, wobei jedoch Möglichkeiten zur umfangreichen und zuverlässigen Steuerung einer bzw. der Bewegtbildkamera 13 sowie zur Überprüfung eingestellter Parameter der Bewegtbildkamera 13 bereitgestellt werden müssen. Eine Ausführungsform einer solchen Fernsteuereinheit 11 ist anhand der Fig. 2A bis 3B veranschaulicht.

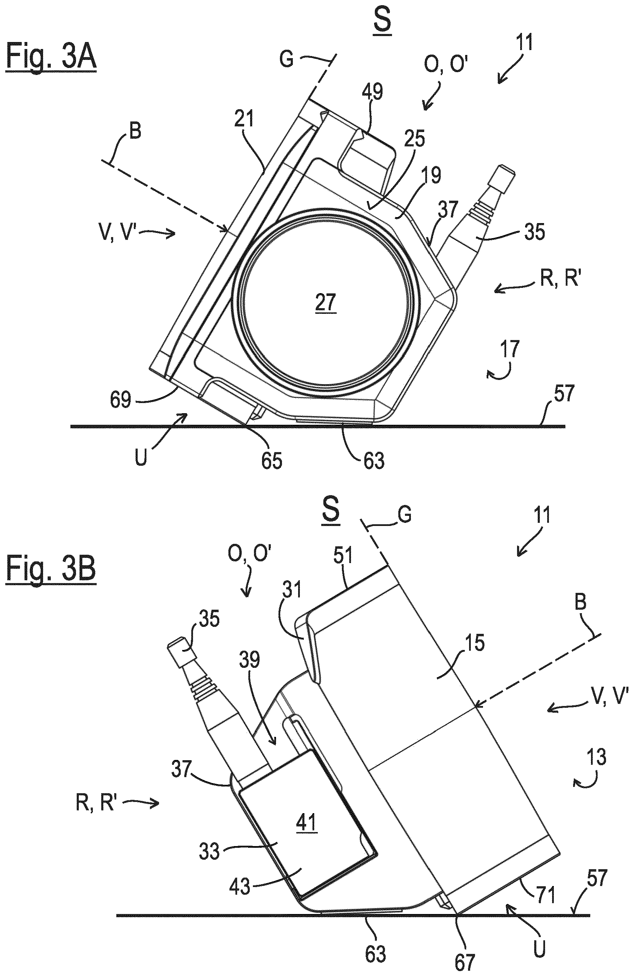

Die Fernsteuereinheit 11 weist einen an einer ersten Seite 13 der Fernsteuereinheit 11 angeordneten Griffabschnitt 15 zum Halten der Fernsteuereinheit 11 auf, von welchem sich entlang einer Grundebene G ein Anzeigeabschnitt 21 zu einer der ersten Seite 13 entgegengesetzten zweiten Seite 17 der Fernsteuereinheit 11 erstreckt (vgl. Fig. 2A und 3A). An der zweiten Seite 17 ragt ein Verlängerungsabschnitt 19 entlang einer senkrecht zu der Grundebene G ausgerichteten Betrachtungsachse B der Fernsteuereinheit 11 von dem Anzeigeabschnitt 21 weg. Der Verlängerungsabschnitt 19 steht somit in Richtung einer Rückseite R' der Fernsteuereinheit 11 von dem Anzeigeabschnitt 21 ab.

Der Anzeigeabschnitt 21 weist eine Vorderseite V und eine Rückseite R auf, wobei der Griffabschnitt 15 an der Rückseite R' der Fernsteuereinheit 11 über die Rückseite R des Anzeigeabschnitts 21 hinausragt, so dass ein Benutzer der Fernsteuereinheit 11 den Griffabschnitt 15 ausgehend von einer Vorderseite V' der Fernsteuereinheit 11 umgreifen und die Fernsteuereinheit 11 einhändig halten kann. Der Griffabschnitt 15 ist abschnittsweise gekrümmt und insbesondere zylinderförmig oder tonnenartig ausgebildet, um großflächig an einer Hand anliegen zu können und ein komfortables Umgreifen zu ermöglichen. Zudem ist an der Rückseite R' der Fernsteuereinheit 11 eine Eingriffsmulde 31 an dem Griffabschnitt 15 ausgebildet, in welche ein Benutzer während des Haltens der Fernsteuereinheit 11 eingreifen kann.

An der Vorderseite V des sich an den Griffabschnitt 15 anschließenden Anzeigeabschnitts 21 ist ein Display 23 angeordnet, welches dazu ausgebildet ist, mittels der Fernsteuereinheit 11 eingestellte Steuerbefehle für die Bewegtbildkamera 113 und/oder Werte von Parametern der Bewegtbildkamera 113 anzuzeigen. Der Anzeigeabschnitt 21 erstreckt sich im Wesentlichen plan entlang der Grundebene G der Fernsteuereinheit 11 und auch das Display 23 erstreckt sich entlang der Grundebene G sowie senkrecht zu der Betrachtungsachse B. Ein entlang der Betrachtungsachse B auf die Fernsteuereinheit 11 blickender Benutzer kann die an dem Display 23 dargestellten Informationen somit komfortabel ablesen.

Der Griffabschnitt 15 ist bei der gezeigten Ausführungsform der Fernsteuereinheit 11 derart angeordnet, dass ein Benutzer die Fernsteuereinheit 11 einhändig mit der linken Hand halten kann, so dass die rechte Hand beispielsweise zum Einstellen von Steuerbefehlen für die Bewegtbildkamera 113 frei bleibt. Um solche Steuerbefehle einstellen zu können, weist der Verlängerungsabschnitt 19 eine von dem Griffabschnitt 15 weg weisende Bedienseite 25 auf, an welcher ein drehbares Bedienelement 27 zum Einstellen von Steuerbefehlen für die Bewegtbildkamera 113 angeordnet ist. Beispielsweise kann es vorgesehen sein, durch Drehen des Bedienelements 27 einen Steuerbefehl für einen der Objektiv-Stellmotoren 115, 117 oder 119 der Bewegtbildkamera 113 einzustellen, um beispielsweise mittels des Objektivrings 116 eine Fokuslage der Bewegtbildkamera 113 verändern zu können. Alternativ dazu kann es jedoch beispielsweise auch vorgesehen sein, durch Drehen des Bedienelements 27 einen Steuerbefehl zum Anpassen einer Brennweite, eines Zoom-Faktors oder einer Irisblendenöffnung der Bewegtbildkamera 113 einzustellen. Grundsätzlich kann ein an der Fernsteuereinheit 11 eingestellter Steuerbefehl einen Soll-Wert für einen der genannten Parameter darstellen.

Indem sich der Anzeigeabschnitt 21 entlang der Grundebene G von dem Griffabschnitt 15 zu der zweiten Seite 17 der Fernsteuereinheit 11 erstreckt, an welcher das Bedienelement 27 angeordnet ist, kann eine kompakte Ausbildung der Fernsteuereinheit 11 bei hoher Übersichtlichkeit und einfacher Bedienbarkeit erreicht werden. Insbesondere kann das Bedienelement 27, welches von dem Griffabschnitt 15 weg weist, gedreht werden, ohne dass dadurch die Sicht eines Benutzers auf das Display 23 beeinträchtigt wird. Ein Benutzer kann somit stets das Display 23 im Auge behalten und beispielsweise eingestellte Steuerbefehle und/oder Parameter der Bewegtbildkamera 113 überprüfen, während die Fernsteuereinheit 11 bedient wird. Insbesondere können die mittels des Bedienelements 27 eingestellten Steuerbefehle unmittelbar an dem Display 23 angezeigt werden, so dass der Benutzer während eines Drehens des Bedienelements 27 an dem Display 23 überprüfen kann, ob der gewünschte Steuerbefehl und/oder ein gewünschter Soll-Wert eines zu verändernden Parameters der Bewegtbildkamera 113 eingestellt ist.

An der Vorderseite V des Anzeigeabschnitts 21 ist darüber hinaus ein weiteres Bedienelement 29 angeordnet, welches als ein Schieber ausgebildet ist. Durch Betätigen des weiteren Bedienelements 29, was beispielsweise mittels eines Daumens während des Haltens der Fernsteuereinheit 11 erfolgen kann, kann insbesondere ein weiterer Steuerbefehl an einen weiteren Objektiv-Stellmotor 115, 117 oder 119 der Bewegtbildkamera 113 übermittelt werden, um beispielsweise zusätzlich zu einer mittels des Bedienelements 27 einstellbaren Fokuslage wahlweise eine Brennweite, einen Zoom-Faktor oder eine Irisblendenöffnung einstellen zu können. Grundsätzlich können an der Vorderseite V des Anzeigeabschnitts 21 auch noch weitere, hier nicht gezeigte Bedienelemente wie etwa weitere Schieber und/oder Tasten angeordnet sein, um eine möglichst umfangreiche Steuerung der Bewegtbildkamera 113 zu ermöglichen. Auch der mittels des weiteren Bedienelements 29 eingestellte weitere Steuerbefehl kann an dem Display 23 angezeigt werden, wobei alternativ oder zusätzlich eine Skala für das weitere Bedienelement 29 an der Vorderseite V des Anzeigeabschnitts 21 vorgesehen sein kann, um dessen Position und dadurch den eingestellten Steuerbefehl ablesen zu können.

Um die eingestellten Steuerbefehle an die Bewegtbildkamera 113 übermitteln zu können, umfasst die Fernsteuereinheit 11 ein Funkmodul 33, welches dazu ausgebildet ist, die mittels des drehbaren Bedienelements 27 und/oder des weiteren Bedienelements 29 eingestellten Steuerbefehle drahtlos an die Bewegtbildkamera zu übermitteln und/oder Werte von Parametern der Bewegtbildkamera drahtlos zu empfangen (vgl. Fig. 2B und 3B). Insbesondere kann das Funkmodul einen Fokuswert, eine Brennweite, eine Irisblendenöffnung und/oder einen Zoom-Faktor von der Bewegtbildkamera 113 empfangen. Sowohl die mittels des Funkmoduls 33 übermittelbaren Steuerbefehle als auch die empfangenen Werte von Parametern der Bewegtbildkamera 113 können in Echtzeit auf dem Display 23 dargestellt werden, so dass ein Benutzer die Ist-Werte und/oder eingestellte Soll-Werte von Parametern der Bewegtbildkamera 113 jederzeit an dem Display 23 überprüfen kann.

Insbesondere kann das Funkmodul 33 dazu ausgebildet sein, über eine Bluetooth-Verbindung, eine WLAN/WiFi-Verbindung und/oder eine Mobilfunkverbindung mit der Bewegtbildkamera 113 zu kommunizieren. Um eine zuverlässige drahtlose Verbindung mit der Bewegtbildkamera 113 herstellen und aufrechterhalten zu können, weist das Funkmodul 33 eine Antenne 35 auf, wobei die Antenne 35 an dem Verlängerungsabschnitt 19 angeordnet ist. Insbesondere ist die Antenne 35 an einem Endabschnitt 37 des Verlängerungsabschnitts 19 angeordnet, welcher von dem Anzeigeabschnitt 21 weg weist. Die Antenne 35 ist dadurch beabstandet von dem Anzeigeabschnitt 21 angeordnet, so dass grundsätzlich mögliche Störungen des Funksignals durch in dem Anzeigeabschnitt 21 angeordnete Elektronikkomponenten oder ein Metallgehäuse des Anzeigeabschnitts 21 verhindert werden können. Zudem steht die Antenne 35 von einer Oberseite O des Verlängerungsabschnitts 19 ab, so dass die Antenne 35 während eines Gebrauchs der Fernsteuereinheit 11 von dem Benutzer weg zeigt und den Benutzer bei der Handhabung der Fernsteuereinheit 11 nicht beeinträchtigt.

Bei der gezeigten Ausführungsform der Fernsteuereinheit 11 ist das Funkmodul 33 lösbar mit dem Verlängerungsabschnitt 19 verbunden. Dies ermöglicht es, das Funkmodul 33 wahlweise mit dem Verlängerungsabschnitt 19 und somit der Fernsteuereinheit 11 zu verbinden oder von dem Verlängerungsabschnitt 19 zu lösen. Dazu weist der Verlängerungsabschnitt 19 an einer dem Bedienelement 27 entgegengesetzten Seite eine Aufnahme 39 auf, in welche das Funkmodul 33 eingesetzt ist (vgl. Fig. 2B und 3B). Insbesondere weist das Funkmodul 33 einen quaderförmigen Funkmodulkörper 41 auf, welcher in die Aufnahme 39 einsetzbar und in der Aufnahme 39 fünfseitig abgestützt ist. Von dem Funkmodulkörper 41 steht die Antenne 35 ab und ragt aus der Aufnahme 39 an der Oberseite O des Verlängerungsabschnitts 19 hinaus.

Wie aus den Fig. 2B und 3B ersichtlich wird, ist die Aufnahme 39 an der Oberseite O des Verlängerungsabschnitts 19 offen, so dass das Funkmodul 33 bzw. der Funkmodulkörper 41 durch eine lineare Bewegung von der Oberseite O des Verlängerungsabschnitts 19 in die Aufnahme 39 eingesetzt werden kann. Indem das eingesetzte Funkmodul 33 fünfseitig in der Aufnahme 39 abgestützt ist, ist eine Entnahme des Funkmoduls 33 aus der Aufnahme 39 ebenfalls ausschließlich durch eine lineare Bewegung in Richtung der Oberseite O des Verlängerungsabschnitts 19 möglich. Dadurch kann das Funkmodul 33 während des Gebrauchs der Fernsteuereinheit 11 zuverlässig in der Aufnahme 39 gehalten werden.

Ferner weist das Funkmodul 33 bzw. der Funkmodulkörper 41 eine Breitseite 43 auf, welche eine Seitenfläche des Funkmoduls 33 mit der größten Flächenausdehnung bildet. Im eingesetzten Zustand des Funkmoduls 33 ist die Breitseite 43 dem Bedienelement 27 entgegengesetzt und wird von zwei Randabschnitten 45, welche senkrecht zueinander ausgerichtet sind, übergriffen, so dass das Funkmodul 33 in einer dem Bedienelement 27 entgegengesetzten Richtung in der Aufnahme 39 abgestützt ist. Indem die Breitseite 43 jedoch lediglich von den stegartigen Randabschnitten 45 übergriffen ist, bleibt die Breitseite 43 im Wesentlichen sichtbar. Diese sichtbar bleibende Breitseite 43 ermöglicht es insbesondere, das Funkmodul 33 durch Kontaktieren der Breitseite 43 aus der Aufnahme 39 hinauszuschieben, so dass das Funkmodul 33 werkzeuglos von dem Verlängerungsabschnitt 19 gelöst werden kann, ohne beispielsweise an der Antenne 35 herausgezogen werden zu müssen. Zudem kann an der Breitseite 43 eine Beschriftung und/oder Kennzeichnung des Funkmoduls 33 angebracht werden, welche im eingesetzten Zustand des Funkmoduls 33 ebenfalls sichtbar bleibt und von einem Nutzer überprüft werden kann. Beispielsweise können an der Breitseite Informationen über einen Funkstandard und/oder eine Funkfrequenz dargestellt werden, über welchen bzw. über welche das Funkmodul 33 kommuniziert. Auch an einer dem Anzeigeabschnitt 21 abgewandten Seite ist die Aufnahme 39 teilweise geöffnet und übergreift das Funkmodul 33 lediglich abschnittsweise, so dass auch durch Schieben des Funkmoduls 33 an dieser Seite ein Entnehmen des Funkmoduls 33 aus der Aufnahme 39 möglich ist.

Insbesondere kann es ein solches lösbares Verbinden des Funkmoduls 33 mit der Fernsteuereinheit 11 ermöglichen, die Fernsteuereinheit 11 mit mehreren verschiedenen Funkmodulen vorzusehen, von welchen ein jeweiliges wahlweise in die Aufnahme 39 eingesetzt werden kann. Beispielsweise können die mehreren, der Fernsteuereinheit 11 zugeordneten Funkmodule dazu ausgebildet sein, über verschiedene Funkstandards und/oder verschiedene Funkfrequenzen zu kommunizieren. Die Fernsteuereinheit 11 kann dadurch beispielsweise flexibel an die zu steuernde Bewegtbildkamera 113 angepasst werden, so dass gewissermaßen die Bewegtbildkamera 113 den zu verwendenden Funkstandard bzw. die zu verwendende Funkfrequenz vorgeben und die Fernsteuereinheit 11 entsprechend nachgerüstet werden kann.

Durch das Einsetzen des Funkmoduls 33 in die Aufnahme 39 derart, dass die Antenne 35 des Funkmoduls 33 an dem Endabschnitt 37 des Verlängerungsabschnitts 19 angeordnet ist, muss die Antenne 35 insbesondere nicht wie herkömmlich an einer Oberseite O' des Anzeigeabschnitts 21 angebracht werden, so dass diese Oberseite O' frei bleibt und beispielsweise zum Anbringen einer Zubehöreinrichtung genutzt werden kann. Dazu ist an der Oberseite O' des Anzeigeabschnitts 21 eine Befestigungsvorrichtung 47 vorgesehen, welche insbesondere eine Befestigungsschiene 53 und eine Befestigungsvertiefung 55 umfasst, wobei die Befestigungsvertiefung 55 beispielsweise als eine Schraubbohrung ausgebildet sein kann. Um eine Zubehöreinrichtung und insbesondere einen Beobachtungsmonitor mit der Fernsteuereinheit 11 zu verbinden, kann die Zubehöreinrichtung beispielsweise auf die Befestigungsschiene 53 aufgeschoben und/oder an der Befestigungsschiene 53 eingehakt werden, so dass ein formschlüssiger Eingriff erreicht werden kann. Alternativ oder zusätzlich kann eine Zubehöreinrichtung mittels in die Befestigungsvertiefungen 55 eingeführter Befestigungsmittel, beispielsweise mittels Befestigungsschrauben, an der Oberseite O' des Anzeigeabschnitts 21 befestigt werden.

Zudem weist der Anzeigeabschnitt 21 an der Oberseite O' eine plane Oberfläche 49 auf, an welcher insbesondere eine Zubehöreinrichtung flächig anliegen und dadurch abgestützt sein kann. An die Oberfläche 49 schließt sich eine ebenfalls plan ausgebildete und sich in einer gemeinsamen Ebene mit der Oberfläche 49 des Anzeigeabschnitts 21 erstreckende Oberfläche 51 des Griffabschnitts 15 an, so dass eine Zubehöreinrichtung auch gemeinsam von den Oberflächen 49 und 51 abgestützt werden kann. Beispielsweise kann es einem Benutzer der Fernsteuereinheit 11 durch Anbringen eines Beobachtungsmonitors mittels der Befestigungsvorrichtung 47 ermöglicht werden, einen von der Bewegtbildkamera 113 aufgenommenen Bildausschnitt zu beobachten, um gegebenenfalls erforderliche Anpassungen der Bewegtbildkamera 113 vornehmen zu können. Ein Display eines solchen an der Fernsteuereinheit 11 befestigten Beobachtungsmonitors kann dazu insbesondere schräg zu der Grundebene G ausgerichtet sein, um während des Gebrauchs der Fernsteuereinheit 11 komfortabel im Blickfeld des Benutzers angeordnet zu sein.

Die Fig. 3A und 3B veranschaulichen ferner, dass die Fernsteuereinheit 11 dazu ausgebildet ist, auf einer horizontalen Ablageebene 57 in einer stabilen Schrägstandposition S abgestellt zu werden. In dieser Schrägstandposition S ist die Betrachtungsachse B der Fernsteuereinheit 11 derart ausgerichtet, dass sie die Ablageebene 57 in einem spitzen Winkel schneidet, wobei dieser Winkel zwischen 25 Grad und 60 Grad liegt und/oder 30 Grad oder 45 Grad betragen kann. Die Betrachtungsachse B ist somit in der Schrägstandposition S derart ausgerichtet, dass sie einer natürlichen und komfortablen Blickrichtung eines Benutzers entspricht, so dass der Benutzer den Anzeigeabschnitt 21 bzw. das Display 23 der beispielsweise auf einem Tisch abgestellten Fernsteuereinheit 11 komfortabel beobachten kann. Insbesondere ist die Fernsteuereinheit 11 in der Schrägstandposition S zudem im Vergleich zu einer vertikalen Ausrichtung der Grundebene G ausschließlich um eine horizontale und parallel zu der Grundebene G verlaufende Achse gekippt, so dass eine Oberkante 59 des Anzeigeabschnitts 21 sowie eine Oberkante 61 des Displays 23 in der Schrägstandposition S in der Horizontalen verlaufen und beispielsweise auf dem Display 23 dargestellte Zahlen in der Schrägstandposition S nicht um die Betrachtungsachse B verdreht dargestellt werden.

Um eine solche stabile Schrägstandposition S der Fernsteuereinheit 11 zu erreichen, weist der Verlängerungsabschnitt 19 der Fernsteuereinheit 11 an einer Unterseite U einen planen Stützabschnitt 63 auf, welcher in einem Anordnungswinkel zu der Grundebene G der Fernsteuereinheit 11 ausgerichtet ist, welcher einen Wert von 90 Grad abzüglich des spitzen Ausrichtungswinkels der Betrachtungsachse B zu der Ablageebene 57 aufweist (vgl. Fig. 2B). Zudem weisen auch der Anzeigeabschnitt 21 und der Griffabschnitt 15 an der Unterseite U einen jeweiligen Stützabschnitt 65 bzw. 67 auf, welcher ebenfalls in dem Anordnungswinkel zu der Grundebene G ausgerichtet und von einer Kante an der Rückseite R des Anzeigeabschnitts 21 gebildet ist, so dass die Fernsteuereinheit 11 in der Schrägstandposition S an den Stützabschnitten 63, 65 und 67 gemeinsam abgestützt ist (vgl. Fig. 3A und 3B).

Somit kann die Fernsteuereinheit 11 in der Schrägstandposition S und derart auf der horizontalen Ablageebene 57 abgestellt werden, dass die Betrachtungsachse B der Fernsteuereinheit 11 die horizontale Ablageebene 57 in Richtung der Rückseite R' der Fernsteuereinheit 11 in einem spitzen Winkel schneidet und das Display 23 nach oben weist. Die Fig. 2A und 2B veranschaulichen, dass die Fernsteuereinheit 11 alternativ dazu auch in einer Aufrechtstandposition A abstellbar ist, in welcher die Betrachtungsachse B der Fernsteuereinheit 11 parallel zu der Ablageebene 57 und somit horizontal ausgerichtet ist. In dieser Aufrechtstandposition A ist die Fernsteuereinheit 11 über einen an der Unterseite U der Fernsteuereinheit 11 ausgebildeten weiteren Stützabschnitt 69 des Anzeigeabschnitts 21 sowie einen weiteren Stützabschnitt 71 des Griffabschnitts 15 abgestützt, wobei die weiteren Stützabschnitte 69 und 71 plan ausgebildet und orthogonal zu der Grundebene G der Fernsteuereinheit 11 ausgerichtet sind. Beispielsweise kann ein Benutzer die Fernsteuereinheit 11 in Abhängigkeit von der Höhe der horizontalen Ablageebene 57 wahlweise in der Schrägstandposition S oder der Aufrechtstandposition A abstellen, um insbesondere das Display 23 stets möglichst komfortabel beobachten zu können.

Die Fernsteuereinheit 11 ermöglicht somit bei einem kompakten Aufbau insbesondere eine komfortable und einfache Handhabung sowie eine umfangreiche Steuerung der Bewegtbildkamera 113, indem mittels des drehbaren Bedienelements 27 und des weiteren Bedienelements 29 verschiedene Steuerbefehle für die Bewegtbildkamera 113 eingestellt werden können. Zudem kann die Fernsteuereinheit 11 aufgrund des auswechselbaren Funkmoduls 33 flexibel an verschiedene Bewegtbildkameras bzw. verschiedene Funkstandards und/oder Funkfrequenzen angepasst werden, wobei die Anordnung der Antenne 35 an dem Verlängerungsabschnitt 19 eine störungsfreie Kommunikation zwischen der Fernsteuereinheit 11 und der Bewegtbildkamera 113 ermöglicht. Durch die Befestigungsvorrichtung 47 kann die Funktionalität der Fernsteuereinheit 11 zudem wahlweise noch erweitert werden, indem zusätzliche Zubehöreinrichtungen an der Oberseite O' des Anzeigeabschnitts 21 befestigt werden.

### Bezugszeichenliste

- 11: Fernsteuereinheit
- 13: erste Seite der Fernsteuereinheit
- 15: Griffabschnitt
- 17: zweite Seite der Fernsteuereinheit
- 19: Verlängerungsabschnitt
- 21: Anzeigeabschnitt
- 23: Display
- 25: Bedienseite
- 27: Bedienelement
- 29: weiteres Bedienelement
- 31: Eingriffsmulde
- 33: Funkmodul
- 35: Antenne
- 37: Endabschnitt des Verlängerungsabschnitts
- 39: Aufnahme
- 41: Funkmodulkörper
- 43: Breitseite des Funkmoduls
- 45: Randabschnitt
- 47: Befestigungsvorrichtung
- 49: Oberfläche
- 51: Oberfläche
- 53: Befestigungsschiene
- 55: Befestigungsvertiefung
- 57: horizontale Ablageebene
- 59: Oberkante des Anzeigeabschnitts
- 61: Oberkante des Displays
- 63: Stützabschnitt des Verlängerungsabschnitts
- 65: Stützabschnitt des Griffabschnitts
- 67: Stützabschnitt des Anzeigeabschnitts
- 69: weiterer Stützabschnitt des Anzeigeabschnitts
- 71: weiterer Stützabschnitt des Griffabschnitts
- 113: Bewegtbildkamera
- 115: Objektiv-Stellmotor
- 116: Objektivring
- 117: Objektiv-Stellmotor
- 118: Objektivring
- 119: Objektiv-Stellmotor
- 120: Objektivring
- 149: Objektiv
- 153: Sucher
- 155: Kamerakörper
- A: Aufrechtstandposition
- B: Betrachtungsachse
- G: Grundebene
- O: Oberseite des Verlängerungsabschnitts
- O': Oberseite des Anzeigeabschnitts
- R: Rückseite des Anzeigeabschnitts
- R': Rückseite der Fernsteuereinheit
- S: Schrägstandposition
- U: Unterseite
- V: Vorderseite des Anzeigeabschnitts
- V': Vorderseite der Fernsteuereinheit

## Patentansprüche

1. Fernsteuereinheit (11) zum Steuern einer Bewegtbildkamera (113), insbesondere einer elektronischen Bewegtbildkamera und/oder einer Filmkamera,
umfassend
- einen an einer ersten Seite (13) der Fernsteuereinheit (11) angeordneten Griffabschnitt (15) zum Halten der Fernsteuereinheit (11),
- einen an einer der ersten Seite (13) entgegengesetzten zweiten Seite (17) der Fernsteuereinheit (11) angeordneten Verlängerungsabschnitt (19) und
- einen sich entlang einer Grundebene (G) von dem Griffabschnitt (15) zu der zweiten Seite (17) der Fernsteuereinheit (11) erstreckenden Anzeigeabschnitt (21), der eine Vorderseite (V) und eine Rückseite (R) aufweist,
wobei der Anzeigeabschnitt (21) an seiner Vorderseite (V) ein Display (23) aufweist, das dazu ausgebildet ist, eingestellte Steuerbefehle und/oder Werte von Parametern der Bewegtbildkamera (113) anzuzeigen, wobei das Display (23) orthogonal zu einer Betrachtungsachse (B) der Fernsteuereinheit (11) ausgerichtet ist,
wobei der Verlängerungsabschnitt (19) an der zweiten Seite (17) der Fernsteuereinheit (11) von dem Anzeigeabschnitt (21) entlang der Betrachtungsachse (B) weg ragt, und
wobei der Verlängerungsabschnitt (19) eine von dem Griffabschnitt (15) weg weisende Bedienseite (25) aufweist, an welcher ein drehbares Bedienelement (27) zum Einstellen von Steuerbefehlen für die Bewegtbildkamera (113) angeordnet ist,
wobei die Fernsteuereinheit (11) dazu ausgebildet ist, auf einer horizontalen Ablageebene (57) derart in einer stabilen Schrägstandposition (S) abgestellt zu werden, dass die Betrachtungsachse (B) der Fernsteuereinheit (11) die Ablageebene (57) in einem spitzen Ausrichtungswinkel zwischen 25 Grad und 60 Grad schneidet, wobei eine Oberkante (59) des Anzeigeabschnitts (21) bei abgestellter Fernsteuereinheit (11) horizontal ausgerichtet ist.

2. Fernsteuereinheit (11) nach Anspruch 1,
wobei der Anzeigeabschnitt (21) im Wesentlichen plan oder gekrümmt ausgebildet ist; und/oder
wobei die Bedienseite (25) senkrecht zu der Grundebene (G) des Anzeigeabschnitts (21) ausgerichtet ist; und/oder
wobei der Verlängerungsabschnitt (19) senkrecht von dem Anzeigeabschnitt (21) weg ragt und/oder senkrecht zu der Grundebene (G) ausgerichtet ist.

3. Fernsteuereinheit (11) Anspruch 1 oder 2,
wobei die Fernsteuereinheit (11) ferner ein Funkmodul (33) umfasst, welches dazu ausgebildet ist, die eingestellten Steuerbefehle drahtlos an die Bewegtbildkamera (113) zu übermitteln und/oder Werte von Parametern der Bewegtbildkamera (113) drahtlos zu empfangen, insbesondere einen Fokuswert, eine Brennweite, eine Irisblendenöffnung und/oder einen Zoom-Faktor,
wobei das Funkmodul (33) insbesondere lösbar mit dem Verlängerungsabschnitt (19) der Fernsteuereinheit (11) verbunden ist.

4. Fernsteuereinheit (11) nach Anspruch 3,
wobei das Funkmodul (33) eine Antenne (35) umfasst, wobei die Antenne (35) des Funkmoduls (33) an dem Verlängerungsabschnitt (19) der Fernsteuereinheit (11) angeordnet ist,
wobei die Antenne (35) des Funkmoduls (33) insbesondere an einem Endabschnitt (37) des Verlängerungsabschnitts (19) angeordnet ist, welcher von dem Anzeigeabschnitt (21) weg weist.

5. Fernsteuereinheit (11) Anspruch 3 oder 4,
wobei der Verlängerungsabschnitt (19) der Fernsteuereinheit (11) eine Aufnahme (39) aufweist, in welche das Funkmodul (33) einsetzbar ist,
wobei die Aufnahme (39) insbesondere an einer dem drehbaren Bedienelement (27) abgewandten Seite des Verlängerungsabschnitts (19) ausgebildet ist.

6. Fernsteuereinheit (11) nach Anspruch 5,
wobei das in die Aufnahme (39) eingesetzte Funkmodul (33) werkzeuglos aus der Aufnahme (39) entnehmbar ist; und/oder
wobei das Funkmodul (33) von einer Oberseite (O) des Verlängerungsabschnitts (19) in die Aufnahme (39) einsetzbar ist; und/oder
wobei die Aufnahme (39) das eingesetzte Funkmodul (33) fünfseitig abstützt.

7. Fernsteuereinheit (11) nach Anspruch 5 oder 6,
wobei das Funkmodul (33) wenigstens eine Breitseite (43) aufweist, die eine Seitenfläche des Funkmoduls (33) mit der größten Flächenausdehnung bildet, wobei die Aufnahme (39) das eingesetzte Funkmodul (33) an der dem drehbaren Bedienelement (27) abgewandten Seite mit zumindest zwei senkrecht zueinander ausgerichteten Randabschnitten (45) übergreift, so dass die wenigstens eine Breitseite (43) des Funkmoduls (33) im Wesentlichen sichtbar bleibt, und/oder
wobei die Aufnahme (39) an einer dem Anzeigeabschnitt (21) abgewandten Seite teilweise geöffnet ist und das eingesetzte Funkmodul (33) abschnittsweise übergreift.

8. Fernsteuereinheit (11) nach einem der Ansprüche 5 bis 7,
wobei die Fernsteuereinheit (11) mehrere Funkmodule (33) umfasst, von denen eines wahlweise in die Aufnahme (39) einsetzbar ist, wobei ein erstes Funkmodul (33) der mehreren Funkmodule (33) dazu ausgebildet ist, über einen ersten Funkstandard und/oder eine erste Funkfrequenz zu kommunizieren, und wobei ein zweites Funkmodul (33) der mehreren Funkmodule (33) dazu ausgebildet ist, über einen zweiten Funkstandard und/oder eine zweite Funkfrequenz zu kommunizieren, wobei sich der erste Funkstandard von dem zweiten Funkstandard unterscheidet und/oder wobei sich die erste Funkfrequenz von der zweiten Funkfrequenz unterscheidet.

9. Fernsteuereinheit (11) nach einem der vorhergehenden Ansprüche,
wobei der Anzeigeabschnitt (21) der Fernsteuereinheit (11) eine Oberseite (O') aufweist, welche sich von dem Griffabschnitt (15) zu der zweiten Seite (17) der Fernsteuereinheit (11) erstreckt, wobei an der Oberseite (O') des Anzeigeabschnitts (21) eine Befestigungsvorrichtung (47) zum Befestigen einer Zubehöreinrichtung, insbesondere eines Beobachtungsmonitors, angeordnet ist.

10. Fernsteuereinheit (11) nach Anspruch 9,
wobei die Oberseite (O') des Anzeigeabschnitts (21) eine plane Oberfläche (49) aufweist, welche quer, insbesondere senkrecht, zu der Grundebene (G) und/oder dem Anzeigeabschnitt (21) ausgerichtet ist,
wobei der Griffabschnitt (15) insbesondere an einer Oberseite eine plane Oberfläche (51) aufweist, welche sich an die Oberfläche (49) des Anzeigeabschnitts (21) anschließt und mit der Oberfläche (49) des Anzeigeabschnitts (21) in einer gemeinsamen Ebene verläuft.

11. Fernsteuereinheit (11) nach Anspruch 9 oder 10,
wobei die Befestigungsvorrichtung (47) eine Befestigungsschiene (53) umfasst,
wobei die Fernsteuereinheit (11) insbesondere zumindest eine Zubehöreinrichtung umfasst, welche durch ein Aufschieben auf die Befestigungsschiene (53) oder durch ein Einhaken an der Befestigungsschiene (53) an der Oberseite des Anzeigeabschnitts (21) befestigbar ist; und/oder wobei die Befestigungsvorrichtung (47) zumindest eine an der Oberseite (O') des Anzeigeabschnitts (21) ausgebildete Befestigungsvertiefung (55), insbesondere eine Schraubbohrung, umfasst,
wobei die Fernsteuereinheit (11) insbesondere zumindest eine Zubehöreinrichtung umfasst, welche mittels eines in die Befestigungsvertiefung (55) einführbaren Befestigungsmittels, insbesondere einer Befestigungsschraube, an der Oberseite (O') des Anzeigeabschnitts (21) befestigbar ist.

12. Fernsteuereinheit (11) nach einem der vorhergehenden Ansprüche,
wobei der spitze Ausrichtungswinkel 30 Grad oder 45 Grad beträgt.

13. Fernsteuereinheit (11) nach einem der vorhergehenden Ansprüche,
wobei die Betrachtungsachse (B) der Fernsteuereinheit (11) die Ablageebene (57) bei abgestellter Fernsteuereinheit (11) in Richtung der Rückseite (R') der Fernsteuereinheit (11) schneidet; und/oder
wobei das Display (23) des Anzeigeabschnitts (21) bei abgestellter Fernsteuereinheit (11) nach oben weist.

14. Fernsteuereinheit (11) nach einem der vorhergehenden Ansprüche,
wobei der Verlängerungsabschnitt (19) der Fernsteuereinheit (11) an einer Unterseite (U) einen planen Stützabschnitt (63), und/oder der Anzeigeabschnitt (21) der Fernsteuereinheit (11) an einer Unterseite (U) einen planen Stützabschnitt, und/oder der Griffabschnitt (15) der Fernsteuereinheit (11) an einer Unterseite (U) einen planen Stützabschnitt aufweist;
wobei der jeweilige Stützabschnitt (63) in einem Anordnungswinkel zu der Grundebene (G) der Fernsteuereinheit (11) ausgerichtet ist, wobei der Anordnungswinkel des jeweiligen Stützabschnitts (63) einem Wert von 90 Grad abzüglich des spitzen Ausrichtungswinkels der Betrachtungsachse (B) entspricht.

15. Fernsteuereinheit (11) nach Anspruch 14,
wobei die Fernsteuereinheit (11) dazu ausgebildet ist, auf der horizontalen Ablageebene (57) wahlweise derart in einer stabilen Aufrechtstandposition (A) abstellbar zu sein, dass die Betrachtungsachse (B) der Fernsteuereinheit (11) parallel zu der Ablageebene (57) ausgerichtet ist, wobei der Anzeigeabschnitt (21) der Fernsteuereinheit (11) an der Unterseite (U) einen planen weiteren Stützabschnitt (69), und/oder der Griffabschnitt (15) der Fernsteuereinheit (11) an einer Unterseite (U) einen planen weiteren Stützabschnitt (71) aufweist, wobei der jeweilige weitere Stützabschnitt (69, 71) orthogonal zu der Grundebene (G) der Fernsteuereinheit (11) ausgerichtet ist.

## Claims

1. A remote control unit (11) for controlling a motion picture camera (113), in particular an electronic motion picture camera and/or a film camera, comprising
- a grip section (15) arranged at a first side (13) of the remote control unit (11) for holding the remote control unit (11),
- an extension section (19) arranged at a second side (17) of the remote control unit (11) opposite the first side (13), and
- a display section (21) which extends along a base plane (G) from the grip section (15) to the second side (17) of the remote control unit (11), the display section (21) comprising a front side (V) and a rear side (R),
wherein the display section (21) comprises a display (23) at its front side (V) which is configured to display set control commands and/or values of parameters of the motion picture camera (113), wherein the display (23) is oriented orthogonal to a viewing axis (B) of the remote control unit (11), wherein the extension section (19) projects away from the display section (21) along the viewing axis (B) at the second side (17) of the remote control unit (11), and
wherein the extension section (19) comprises an operating side (25) facing away from the grip section (15), at which a rotatable operating element (27) for setting control commands for the motion picture camera (113) is arranged,
wherein the remote control unit (11) is configured to be placed down on a horizontal ground plane (57) in a stable inclined standing position (S) in such a way that the viewing axis (B) of the remote control unit (11) intersects the ground plane (57) at an acute angle of orientation between 25 degrees and 60 degrees, wherein an upper edge (59) of the display section (21) is oriented horizontal when the remote control unit (11) is placed down.

2. A remote control unit (11) according to claim 1,
wherein the display section (21) is configured substantially planar or curved; and/or
wherein the operating side (25) is oriented perpendicular to the base plane (G) of the display section (21); and/or
wherein the extension section (19) projects perpendicularly away from the display section (21) and/or is oriented perpendicular to the base plane (G).

3. A remote control unit (11) according to claim 1 or 2,
wherein the remote control unit (11) further comprises a radio module (33) which is configured to wirelessly transmit the set control commands to the motion picture camera (113) and/or to wirelessly receive values of parameters of the motion picture camera (113), in particular a focus value, a focal length, an iris aperture and/or a zoom factor,
wherein the radio module (33) is in particular releasably connected to the extension section (19) of the remote control unit (11).

4. A remote control unit (11) according to claim 3,
wherein the radio module (33) comprises an antenna (35), wherein the antenna (35) of the radio module (33) is positioned at the extension section (19) of the remote control unit (11),
wherein the antenna (35) of the radio module (33) is in particular positioned at an end portion (37) of the extension section (19) which faces away from the display section (21).

5. A remote control unit (11) according to claim 3 or 4,
wherein the extension section (19) of the remote control unit (11) comprises a receptacle (39) in which the radio module (33) is insertable,
wherein the receptacle (39) is in particular configured at a side of the extension section (19) facing away from the rotatable operating element (27).

6. A remote control unit (11) according to claim 5,
wherein the radio module (33) inserted in the receptacle (39) is removable from the receptacle (39) without tools; and/or
wherein the radio module (33) can be inserted in the receptacle (39) from an upper side (O) of the extension section (19); and/or
wherein the receptacle (39) supports the inserted radio module (33) on five sides.

7. A remote control unit (11) according to claim 5 or 6,
wherein the radio module (33) comprises at least one broadside (43) which forms a side surface of the radio module (33) with the largest surface area, wherein the receptacle (39) overlaps the inserted radio module (33) with at least two edge sections (45) oriented perpendicular to one another at the side facing away from the rotatable operating element (27) so that the at least one broadside (43) of the radio module (33) remains substantially visible, and/or
wherein the receptacle (39) is partially open at a side facing away from the display section (21) and overlaps the inserted radio module (33) partly.

8. A remote control unit (11) according to any one of the claims 5 to 7,
wherein the remote control unit (11) comprises a plurality of radio modules (33), one of which is selectively insertable in the receptacle (39), wherein a first radio module (33) of the plurality of radio modules (33) is configured to communicate over a first radio standard and/or a first radio frequency, and wherein a second radio module (33) of the plurality of radio modules (33) is configured to communicate over a second radio standard and/or a second radio frequency, wherein the first radio standard is different from the second radio standard and/or wherein the first radio frequency is different from the first radio frequency.

9. A remote control unit (11) according to any one of the preceding claims, wherein the display section (21) of the remote control unit (11) comprises an upper side (O') which extends from the grip section (15) to the second side (17) of the remote control unit (11), wherein at the upper side (O') of the display section (21) an attachment device (47) for attaching an accessory device, in particular a viewing monitor, is arranged.

10. A remote control unit (11) according to claim 9,
wherein the upper side (O') of the display section (21) comprises a planar surface (49) which is oriented transverse, in particular perpendicular, to the base plane (G) and/or to the display section (21),
wherein the grip section (15) in particular comprises a planar surface (51) at an upper side, which adjoins the surface (49) of the display section (21) and follows a common plane with the surface (49) of the display section (21).

11. A remote control unit (11) according to claim 9 or 10,
wherein the attachment device (47) comprises a fastening rail (53), wherein the remote control unit (11) in particular comprises at least one accessory device which is attachable at the upper side of the display section (21) by being slid onto the fastening rail (53) or by being hooked to the fastening rail (53); and/or
wherein the attachment device (47) comprises at least one fastening recess (55) configured at the upper side (O') of the display section (21), in particular a screw hole,
wherein the remote control unit (11) in particular comprises at least one accessory device which is attachable at the upper side (O') of the display section (21) by means of a fastening means which is insertable into the fastening recess (55), in particular a fastening screw.

12. A remote control unit (11) according to any one of the preceding claims,
wherein the acute angle of orientation is 30 degrees or 45 degrees.

13. A remote control unit (11) according to any one of the preceding claims,
wherein the viewing axis (B) of the remote control unit (11) intersects the ground plane (57) in the direction of the rear side (R') of the remote control unit (11) when the remote control unit (11) is placed down; and/or
wherein the display (23) of the display section (21) points upwards when the remote control unit (11) is placed down.

14. A remote control unit (11) according to any one of the preceding claims,
wherein the extension section (19) of the remote control unit (11) comprises a planar support section (63) at an underside (U) and/or the display section (21) of the remote control unit (11) comprises a planar support section at an underside (U) and/or the grip section (15) of the remote control unit (11) comprises a planar support section at an underside (U);
wherein the respective support section (63) is oriented at an angle of placement to the base plane (G) of the remote control unit (11), wherein the angle of placement of the respective support section (63) corresponds to a value of 90 degrees minus the acute angle of orientation of the viewing axis (B).

15. A remote control unit (11) according to claim 14,
wherein the remote control unit (11) is configured to be selectively placed down on the horizontal ground plane (57) in a stable upright position (A) in such a way that the viewing axis (B) of the remote control unit (11) is oriented parallel to the ground plane (57), wherein the display section (21) of the remote control unit (11) comprises a planar further support section (69) at the underside (U) and/or the grip section (15) of the remote control unit (11) comprises a planar further support section (71) at an underside (U), wherein the respective further support section (69, 71) is oriented orthogonal to the base plane (G) of the remote control unit (11).

## Revendications

1. Unité de télécommande (11) pour commander une caméra à images animées (113), en particulier une caméra électronique à images animées et/ou une caméra cinématographique,
comprenant
- une partie de poignée (15), disposée sur un premier côté (13) de l'unité de télécommande (11), pour tenir l'unité de télécommande (11),
- une partie de prolongement (19) disposée sur un deuxième côté (17) de l'unité de télécommande (11), opposé au premier côté (13), et
- une partie d'affichage (21) qui s'étend le long d'un plan de base (G) depuis la partie de poignée (15) jusqu'au deuxième côté (17) de l'unité de télécommande (11) et qui présente une face avant (V) et une face arrière (R), dans laquelle
la partie d'affichage (21) comprend, sur sa face avant (V), un écran d'affichage (23) conçu pour afficher des instructions de commande réglées et/ou des valeurs de paramètres de la caméra à images animées (113), l'écran d'affichage (23) étant orienté orthogonalement à un axe d'observation (B) de l'unité de télécommande (11),
la partie de prolongement (19) disposée sur le deuxième côté (17) de l'unité de télécommande (11) fait saillie de la partie d'affichage (21) le long de l'axe d'observation (B), et
la partie de prolongement (19) présente un côté de commande (25) détourné de la partie de poignée (15), sur lequel est disposé un élément de commande rotatif (27) destiné à régler des instructions de commande pour la caméra à images animées (113),
l'unité de télécommande (11) est conçue pour pouvoir être posée sur un plan de rangement horizontal (57) dans une position inclinée stable (S) de telle sorte que l'axe d'observation (B) de l'unité de télécommande (11) coupe le plan de rangement (57) selon un angle d'orientation aigu compris entre 25 degrés et 60 degrés, un bord supérieur (59) de la partie d'affichage (21) étant orienté horizontalement lorsque l'unité de télécommande (11) est posée.

2. Unité de télécommande (11) selon la revendication 1,
dans laquelle la partie d'affichage (21) est sensiblement plane ou incurvée ; et/ou
le côté de commande (25) est orienté perpendiculairement au plan de base (G) de la partie d'affichage (21) ; et/ou
la partie de prolongement (19) fait saillie perpendiculairement de la partie d'affichage (21) et/ou est orientée perpendiculairement au plan de base (G).

3. Unité de télécommande (11) selon la revendication 1 ou 2,
dans laquelle l'unité de télécommande (11) comprend en outre un module radio (33) conçu pour transmettre sans fil les instructions de commande réglées à la caméra à images animées (113) et/ou pour recevoir sans fil des valeurs de paramètres de la caméra à images animées (113), en particulier une valeur de focalisation, une distance focale, une ouverture de diaphragme à iris et/ou un facteur de zoom,
le module radio (33) est en particulier relié de manière amovible à la partie de prolongement (19) de l'unité de télécommande (11).

4. Unité de télécommande (11) selon la revendication 3,
dans laquelle le module radio (33) comprend une antenne (35), l'antenne (35) du module radio (33) étant disposée sur la partie de prolongement (19) de l'unité de télécommande (11),
l'antenne (35) du module radio (33) est disposée en particulier sur une partie d'extrémité (37) de la partie de prolongement (19), qui est détournée de la partie d'affichage (21).

5. Unité de télécommande (11) selon la revendication 3 ou 4,
dans laquelle la partie de prolongement (19) de l'unité de télécommande (11) présente un logement (39) dans lequel le module radio (33) peut être inséré,
le logement (39) est en particulier formé sur un côté de la partie de prolongement (19) détourné de l'élément de commande rotatif (27).

6. Unité de télécommande (11) selon la revendication 5,
dans laquelle le module radio (33) inséré dans le logement (39) peut être retiré du logement (39) sans outil ; et/ou
le module radio (33) peut être inséré dans le logement (39) par une face supérieure (O) de la partie de prolongement (19) ; et/ou
le logement (39) supporte le module radio inséré (33) sur cinq côtés.

7. Unité de télécommande (11) selon la revendication 5 ou 6,
dans laquelle le module radio (33) présente au moins un côté large (43) qui constitue une surface latérale du module radio (33) ayant la plus grande extension de surface, et, sur le côté détourné de l'élément de commande rotatif (27), le logement (39) recouvre le module radio inséré (33) par au moins deux parties de bord (45) orientées perpendiculairement l'une à l'autre, de sorte que ledit au moins un côté large (43) du module radio (33) reste sensiblement visible, et/ou
le logement (39) est partiellement ouvert sur un côté détourné de la partie d'affichage (21) et recouvre localement le module radio inséré (33).

8. Unité de télécommande (11) selon l'une des revendications 5 à 7,
dans laquelle l'unité de télécommande (11) comprend une pluralité de modules radio (33) dont l'un peut être inséré sélectivement dans le logement (39),
un premier module radio (33) de la pluralité de modules radio (33) est conçu pour communiquer via une première norme radio et/ou une première fréquence radio, et un deuxième module radio (33) de la pluralité de modules radio (33) est conçu pour communiquer via une deuxième norme radio et/ou une deuxième fréquence radio, la première norme radio étant différente de la deuxième norme radio et/ou la première fréquence radio étant différente de la deuxième fréquence radio.

9. Unité de télécommande (11) selon l'une des revendications précédentes, dans laquelle la partie d'affichage (21) de l'unité de télécommande (11) présente une face supérieure (O') qui s'étend depuis la partie de poignée (15) jusqu'au deuxième côté (17) de l'unité de télécommande (11), un dispositif de fixation (47), destiné à fixer un équipement accessoire, en particulier un écran d'observation, étant disposé sur la face supérieure (O') de la partie d'affichage (21).

10. Unité de télécommande (11) selon la revendication 9,
dans laquelle la face supérieure (O') de la partie d'affichage (21) présente une surface plane (49) orientée transversalement, en particulier perpendiculairement, par rapport au plan de base (G) et/ou à la partie d'affichage (21),
la partie de poignée (15) en particulier présente sur une face supérieure une surface plane (51) qui se raccorde à la surface (49) de la partie d'affichage (21) et s'étend dans un plan commun avec la surface (49) de la partie d'affichage (21).

11. Unité de télécommande (11) selon la revendication 9 ou 10,
dans laquelle le dispositif de fixation (47) comprend un rail de fixation (53), l'unité de télécommande (11) comprend en particulier au moins un dispositif accessoire qui peut être fixé sur la face supérieure de la partie d'affichage (21) par emboîtement sur le rail de fixation (53) ou par accrochage sur le rail de fixation (53) ; et/ou
dans laquelle le dispositif de fixation (47) présente au moins un renfoncement de fixation (55), en particulier un perçage taraudé, ménagé sur la face supérieure (O') de la partie d'affichage (21),
l'unité de télécommande (11) comprend en particulier au moins un dispositif accessoire qui peut être fixé à la face supérieure (O') de la partie d'affichage (21) par un moyen de fixation, en particulier une vis de fixation, susceptible d'être introduit dans le renfoncement de fixation (55).

12. Unité de télécommande (11) selon l'une des revendications précédentes, dans laquelle l'angle d'orientation aigu est de 30 degrés ou de 45 degrés.

13. Unité de télécommande (11) selon l'une des revendications précédentes, dans laquelle, lorsque l'unité de télécommande (11) est posée, l'axe d'observation (B) de l'unité de télécommande (11) coupe le plan de rangement (57) en direction de la face arrière (R') de l'unité de télécommande (11) ; et/ou
lorsque l'unité de télécommande (11) est posée, l'écran d'affichage (23) de la partie d'affichage (21) est dirigé vers le haut.

14. Unité de télécommande (11) selon l'une des revendications précédentes, dans laquelle la partie de prolongement (19) de l'unité de télécommande (11) comprend une partie de support plane (63) sur une face inférieure (U), et/ou la partie d'affichage (21) de l'unité de télécommande (11) comprend une partie de support plane sur une face inférieure (U), et/ou la partie de poignée (15) de l'unité de télécommande (11) comprend une partie de support plane sur une face inférieure (U) ;
la partie de support respective (63, 65, 67) est orientée selon un angle d'agencement par rapport au plan de base (G) de l'unité de télécommande (11), l'angle d'agencement de la partie de support respective (63) correspondant à une valeur de 90 degrés, déduction faite de l'angle d'orientation aigu de l'axe d'observation (B).

15. Unité de télécommande (11) selon la revendication 14,
dans laquelle l'unité de télécommande (11) est conçue pour pouvoir être posée sélectivement sur le plan de rangement horizontal (57) dans une position debout stable (A) de telle sorte que l'axe d'observation (B) de l'unité de télécommande (11) est orienté parallèlement au plan de rangement (57), la partie d'affichage (21) de l'unité de télécommande (11) comprenant sur la face inférieure (U) une autre partie de support plane (69), et/ou la partie de poignée (15) de l'unité de télécommande (11) comprenant sur une face inférieure (U) une autre partie de support plane (71), l'autre partie de support respective (69, 71) étant orientée orthogonalement par rapport au plan de base (G) de l'unité de télécommande (11).
